# EUROPEAN PATENT APPLICATION

(11) **EP 4 648 469 A1**
(43) Date of publication of application: **12.11.2025**
(21) Application number: 24175286.4
(22) Date of filing: 10.05.2024
(51) Int. Cl.: H04W 24/10

(54) **DEACTIVATING IMMEDIATE RADIO MEASUREMENTS WHEN LOGGING RADIO MEASUREMENTS**

(71) Applicant: Nokia Technologies Oy, 02610 Espoo (FI)
(72) Inventor: TOMALA, Malgorzata, 54-511 Wroclaw (PL); FEVOLD, Jerediah, Chicago, IL, 60611 (US); HASSAN, Sakira, 02780 Espoo (FI); PANTELIDOU, Anna, 92160 Antony (FR)
(74) Representative: Samson & Partner Patentanwälte mbB

(57) **Abstract**

Methods, apparatuses, and systems are provided for radio measurements in mobile communications. A user equipment may receive, from a network node, a radio measurement report configuration comprising a logged radio measurement report configuration, in response to determining an immediate radio measurement report deactivation command, deactivate transmission of immediate radio measurement report, and perform logged radio measurements over time according to the logged radio measurement report configuration. Similarly, a network node may determine that data collection of logged radio measurements is to be initiated with the user equipment, transmit, to the user equipment, a radio measurement report configuration comprising a logged radio measurement report configuration, and indicate, to the user equipment, to deactivate transmission of immediate radio measurement reports with an immediate radio measurement report deactivation command.

## Description

### THECHNICAL FIELD

The subject disclosure generally relates to wireless communication systems and, in particular, to enabling deactivation of immediate radio measurements when logging radio measurements

### BACKGROUND

Wireless communication systems, also referred to mobile communication systems, are under constant development. One core aspect in mobile communication systems is the provision of radio measurements from a user equipment (UE) to the network for supporting communication operations. Such radio measurements may be channel status information (CSI) measurements that are provided in CSI-reports from the UE to the network at configured reporting instances based on the latest radio measurements relating to a channel status and quality.

Besides these immediate CSI-reports, a Minimization of Drive Tests (MDT)-framework can be used for transmitting radio measurement data from UEs to the network. UEs are tapped to collect radio measurements. The network, thus uses UEs 110 to collect mobile network data. MDT can be categorized in immediate MDT for UEs 110 in connected state and logged MDT for UEs in idle state.

However, none of these currently defined radio measurement principles allow a flexible data collection but the measurements are always bound to their purpose. Therefore, methods and apparatuses for enabling flexible control of radio measurements are required.

### SUMMARY

According to a first aspect of the subject disclosure, a method of radio measurements performed by a user equipment is provided. The method comprises receiving, from a network node, a radio measurement report configuration comprising a logged radio measurement report configuration, in response to determining an immediate radio measurement report deactivation command, deactivating transmission of immediate radio measurement reports, and performing logged radio measurements over time according to the logged radio measurement report configuration.

According to a second aspect of the subject disclosure, a method of acquiring radio measurements from a user equipment performed by a network node is provided. The method comprises determining that data collection of logged radio measurements is to be initiated with the user equipment, transmitting, to the user equipment, a radio measurement report configuration comprising a logged radio measurement report configuration, and indicating, to the user equipment, to deactivate transmission of immediate radio measurement reports with an immediate radio measurement report deactivation command.

According to a third aspect of the subject-disclosure, an apparatus of a user equipment is provided, which is configured to execute the methods described herein.

According to a fourth aspect of the subject-disclosure, an apparatus of a network node is provided, which is configured to execute the methods described herein.

According to a fifth aspect of the subject-disclosure, a system of mobile communication between a user equipment and a network node is provided, wherein the user equipment is configured to execute the methods described herein and the network node is configured to execute the methods described herein.

Further embodiments are defined by the dependent claims.

The above-noted aspects and features may be implemented in systems, apparatuses, methods, articles and non-transitory computer-readable media depending on the desired configuration. The subject disclosure may be implemented in and used with a number of different types of devices, including but not limited to cellular phones, tablet computers, wearable computing devices, portable media players, and any of various other computing devices.

This summary is intended to provide a brief overview of some of the aspects and features according to the subject disclosure. Accordingly, it will be appreciated that the above-described features are merely examples and should not be construed to narrow the scope of the subject disclosure in any way. Other features, aspects, and advantages of the subject disclosure will become apparent from the following detailed description, drawings and claims.

### BRIEF DESCRIPTION OF THE DRAWINGS

A better understanding of the subject disclosure may be obtained when the following detailed description of various embodiments is considered in conjunction with the following drawings, in which:
FIG. 1 shows a schematic diagram of an example wireless network;
FIG. 2 shows a schematic diagram of an example wireless device;
FIG. 3 shows a schematic diagram of an example network node;
FIG. 4 is a flow chart of processes for enabling logging of radio measurements at a user equipment side.
FIG. 5 is a flow chart of processes for enabling logging of radio measurements at a network node side.
FIG. 6 shows a message flow diagram of implicitly activating logged radio measurements according to an embodiment of the disclosure.
FIG. 7 shows a message flow diagram of explicitly activating logged radio measurements according to an embodiment of the disclosure.
FIG. 8 shows a message flow diagram of explicitly deactivating immediate radio measurements according to an embodiment of the disclosure.
FIG. 9 shows a message flow diagram including determination of data collection requirement according to the disclosure.
FIG. 10 shows a message flow diagram of dynamically switching between immediate and logged radio measurements according to an embodiment of the disclosure.
FIG. 11 shows a message flow diagram of dynamically switching between immediate and logged radio measurements and combining them according to an embodiment of the disclosure.
FIG. 12 shows a message flow diagram of a possible implementation in connection with channel status information reporting according to the disclosure.
FIG. 13 shows a message flow diagram of two further possible implementations in connection with channel status information reporting according to the disclosure.
FIG. 14 shows a message flow diagram depicting internal processes of a network node.

### DETAILED DESCRIPTION

The examples and embodiments set forth below represent information to enable those skilled in the art to practice the subject disclosure. Upon reading the following description in light of the accompanying drawing figures, those skilled in the art will understand the concepts of the description and will recognize applications of these concepts not particularly addressed herein. It should be understood that these concepts and applications fall within the scope of the description.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

As used herein, "plurality" means two or more. As used herein, a "set" of items may include one or more of such items. As used herein, whether in the subject disclosure or the claims, the terms "comprising", "including", "carrying", "having", "containing", "involving", and the like are to be understood to be open-ended, i.e., to mean including but not limited to. Only the transitional phrases "consisting of" and "consisting essentially of", respectively, are closed or semi-closed transitional phrases with respect to claims. Use of ordinal terms such as "first", "second", "third", etc., in the claims or the subject disclosure to modify an element does not by itself connote any priority, precedence, or order of one element over another or the temporal order in which acts of a method are performed, but are used merely as labels to distinguish one element having a certain name from another element having a same name (but for use of the ordinal term) to distinguish the elements. As used herein, "and/or" and "at least one of" means that the listed items are alternatives, but the alternatives also include any combination of the listed items.

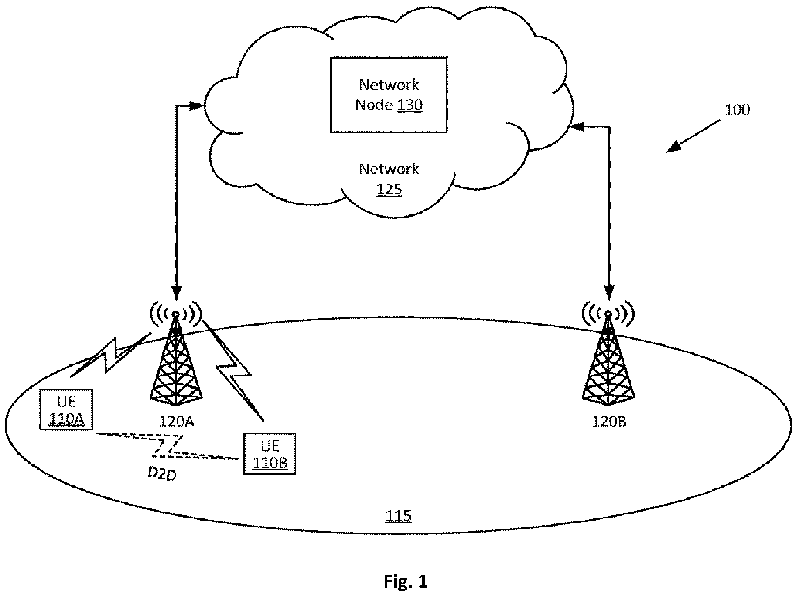

Before explaining the examples according to the subject disclosure in detail, certain general principles of a wireless communication system are briefly explained with reference to FIGS. 1 to 3 to assist in understanding the technology underlying the described examples.

FIG. 1 illustrates an example of a wireless network 100 that may be used for wireless communications. Wireless network 100 includes wireless devices, such as UEs 110 (e.g., 110A-110B), and network nodes 120/130, such as radio access nodes 120 (e.g., 120A-120B, which may be network nodes like eNBs, gNBs, etc.), connected to one or more further network nodes 130 over an interconnecting network 125. The network 100 may use any suitable deployment scenarios. UEs 110 within coverage area 115 may each be capable of communicating directly with radio access nodes 120 over a wireless or air interface. In some embodiments, UEs 110 may also be capable of communicating with each other via D2D communication.

As an example, UE 110A may communicate with radio access node 120A over a wireless or air interface. That is, UE 110A may transmit wireless signals to and/or receive wireless signals from radio access node 120A. The wireless signals may contain voice traffic, data traffic, control signals, and/or any other suitable information.

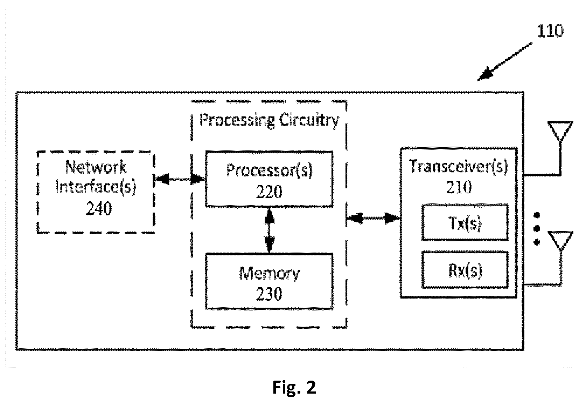

As used herein, the term "user equipment" (UE) (e.g., UE 110) has the full breadth of its ordinary meaning and may refer to any type of wireless device which may communicate with a network node (e.g., network node 120) and/or with another UE (e.g., different to UE 110) in a cellular or mobile or wireless communication system. Examples of UE are target device, D2D UE, machine type UE or UE capable of machine-to-machine (M2M) communication, personal digital assistant, tablet, mobile terminal, smart phone, laptop embedded equipped (LEE), laptop mounted equipment (LME), USB dongles, ProSe UE, vehicle-to-vehicle (V2V) UE, V2X UE, MTC UE, eMTC UE, FeMTC UE, UE Cat 0, UE Cat Ml, narrow band IoT (NB-IoT) UE, UE Cat NB1, etc. Example embodiments of a UE are described in more detail below with respect to FIG. 2.

In some embodiments, an area of wireless signal coverage 115 associated with a radio access node 120 may be referred to as a cell. However, particularly with respect to the 5^{th} generation (5G) / New Radio (NR) mobile communication concepts, beams, such as the herein described multicast radio beams (MRBs) may be used within cells for communication.

With respect to a beam-based mobile communication system, the radio access node 120 (base station) may transmit a beamformed signal to the UE 110 in one or more transmit directions (transmission beam, Tx beam). The UE 110 may receive the beamformed signal from the base station 120 in one or more receive directions (reception beam, Rx beam). The UE 110 may also transmit a beamformed signal to the base station 120 in one or more directions and the base station 120 may receive the beamformed signal from the UE 110 in one or more directions. The base station 120 and the UE 110 may determine the best receive and transmit directions, e.g., *best* in the sense of these directions leading to the highest link quality or fulfilling other quality conditions in the most suitable manner, for each of the base station/UE pairs.

The interconnecting network 125 may refer to any interconnecting system capable of transmitting audio, video, signals, data, messages, etc., or any combination of the preceding. The interconnecting network 125 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the network node 130 may be a core network node, managing the establishment of communication sessions and other various other functionalities for UEs 110. Examples of network node 130 may include mobile switching center (MSC), MME, serving gateway (SGW), packet data network gateway (PGW), operation and maintenance (O&M), operations support system (OSS), SON, positioning node (e.g., Enhanced Serving Mobile Location Center, E-SMLC), location server node, Minimization of Drive Tests (MDT) node, etc. UEs 110 may exchange certain signals with the network node 130 using the non-access stratum (NAS) layer. In non-access stratum signaling, signals between UEs 110 and the network node 130 may be transparently passed through the radio access network. In some embodiments, radio access nodes 120 may interface with one or more network nodes 130 over an internode interface.

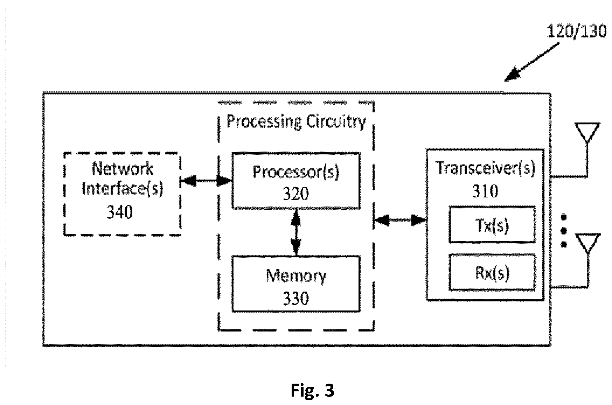

As used herein, the term "network node" has the full breadth of its ordinary meaning and may correspond to any type of radio access node (e.g., radio network node 120) or any network node, which may communicate with a UE and/or with another network node in a cellular or mobile or wireless communication system. Examples of network nodes are NodeB, MeNB, SeNB, a network node may belonging to MCG or SCG, base station (BS), multistandard radio (MSR) radio access node such as MSR BS, eNodeB, network controller, radio network controller (RNC), base station controller (BSC), relay, donor node controlling relay, base transceiver station (BTS), access point (AP), transmission point, transmission node, RRU, RRH, node in distributed antenna system (DAS), core network node (e.g., MSC, MME, etc.), O&M, OSS, Self-organizing Network (SON), positioning node (e.g., E-SMLC), MDT, test equipment, etc. Example embodiments of a network node are described in more detail below with respect to FIG. 3.

In some embodiments, network node 120 may be a distributed radio access node. The components of the radio access node 120, and their associated functions, may be separated into two main units (or sub-radio network nodes) which may be referred to as the central unit (CU) and the distributed unit (DU). Different distributed radio network node architectures are possible. For instance, in some architectures, a DU may be connected to a CU via dedicated wired or wireless link (e.g., an optical fiber cable) while in other architectures, a DU may be connected a CU via a transport network. Also, how the various functions of the radio access node 120 are separated between the CU(s) and DU(s) may vary depending on the chosen architecture.

In some embodiments, radio access nodes 120 may communicate with each other over terrestrial or other connections. The communication between the radio access nodes 120 may, e.g., in a 5G / NR communication system may be achieved by using an Xn interface connecting the radio access nodes 120.

Exemplary wireless communication systems are architectures standardized by the 3rd Generation Partnership Project (3GPP). A latest 3GPP based development is often referred to as the long-term evolution (LTE) of the Universal Mobile Telecommunications System (UMTS) radio-access technology (RAT). The various development stages of the 3GPP specifications are referred to as releases. More recent developments of the LTE are often referred to as LTE Advanced (LTE-A). The LTE (LTE-A) employs a radio mobile architecture known as the Evolved Universal Terrestrial Radio Access Network (E-UTRAN) and a core network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other RAT examples comprise those provided by base stations of systems that are based on technologies such as WLAN and/or Worldwide Interoperability for Microwave Access (WiMax). A base station may provide coverage for an entire cell or similar radio service area. Core network elements include Mobility Management Entity (MME), Serving Gateway (S-GW) and Packet Gateway (P-GW).

An example of a suitable communications system is the 5G or NR concept. Network architecture in NR may be similar to that of LTE-A. Base stations of NR systems may be known as next generation Node Bs (gNBs). Changes to the network architecture may depend on the need to support various radio technologies and finer Quality of Service (QoS) support, and some on-demand requirements for QoS levels to support Quality of Experience (QoE) of user point of view. Also network aware services and applications, and service and application aware networks may bring changes to the architecture. Those are related to Information Centric Network (ICN) and User-Centric Content Delivery Network (UC-CDN) approaches. NR may use multiple input-multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes, or hosts. It should also be understood that the distribution of labor between core network operations and base station operations may differ from that of the LTE or even be non-existent.

An example 5G core network (CN) comprises functional entities. The CN is connected to a UE via the radio access network (RAN). An UPF (User Plane Function) whose role is called PSA (PDU Session Anchor) may be responsible for forwarding frames back and forth between the DN (data network) and the tunnels established over the 5G towards the UEs exchanging traffic with the data network (DN). The UPF is controlled by an SMF (Session Management Function) that receives policies from a PCF (Policy Control Function). The CN may also include an AMF (Access & Mobility Function).

Generally, all concepts disclosed herein may be applicable to different communication networks, comprising but not limited to LTE, LTE-A, 5G, 5G advanced, 6G, and other future or already implemented networks.

FIG. 2 is a schematic diagram of an apparatus for the UE. In an embodiment, the apparatus may comprise the UE, in yet another embodiment the apparatus is comprised in the UE, and in another embodiment the apparatus is the UE. The apparatus may comprise a wireless device. The apparatus may comprise at least one processor 220 and at least memory 230 storing computer program instructions that, when executed by the at least one processor 220, cause the apparatus to carry out the embodiments of the UE 110 described herein. UE 110 includes a transceiver 210, processor 220, memory 230, and a network interface 240. In some embodiments, the transceiver 210 facilitates transmitting wireless signals to and receiving wireless signals from radio access node 120 (e.g., via transmitter(s) (Tx), receiver(s) (Rx) and antenna(s)). The processor 220 executes instructions to provide some or all of the functionalities described herein as being provided by UE 110, and the memory 230 stores the instructions executed by the processor 220. In some embodiments, the processor 220 and the memory 230 form processing circuitry.

The processor 220 may include any suitable combination of hardware to execute instructions and manipulate data to perform some or all of the described functions of UE 110 described herein. In some embodiments, the processor 220 may include, for example, one or more computers, one or more central processing units (CPUs), one or more microprocessors, one or more application specific integrated circuits (ASICs), one or more field programmable gate arrays (FPGAs) and/or other logic.

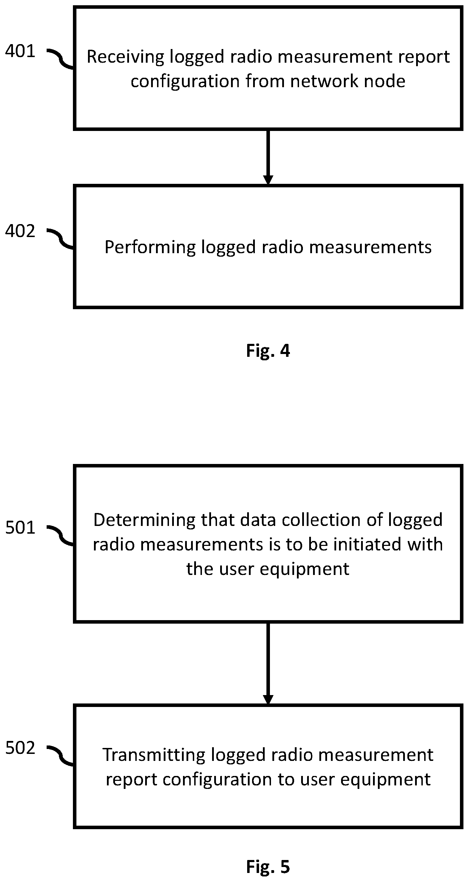

The memory 230 is generally operable to store instructions, such as a computer program, software, an application including one or more of logic, rules, algorithms, code, tables, etc. and/or other instructions capable of being executed by a processor 220. Examples of memory 230 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information, data, and/or instructions that may be used by the processor 220 of UE 110. For example, the memory 230 includes computer program code causing the processor 220 to perform processing according to the methods described herein, e.g., the method of FIG. 4.

The network interface 240 is communicatively coupled to the processor 220 and may refer to any suitable device operable to receive input for UE 110, send output from UE 110, perform suitable processing of the input or output or both, communicate to other devices, or any combination thereof. The network interface 240 may include appropriate hardware (e.g., port, modem, network interface card, etc.) and software, including protocol conversion and data processing capabilities, to communicate through a network.

Other embodiments of UE 110 may include additional components beyond those shown in FIG. 2 that may be responsible for providing certain aspects of the wireless device's functionalities, including any of the functionalities described herein and/or any additional functionalities (including any functionality necessary to support the mechanisms according to the subject disclosure). As an example, UE 110 may include input devices and circuits, output devices, and one or more synchronization units or circuits, which may be part of the processor 220. Input devices include mechanisms for entry of data into UE 110. For example, input devices may include input mechanisms, such as a microphone, input elements, a display, etc. Output devices may include mechanisms for outputting data in audio, video and/or hard copy format. For example, output devices may include a speaker, a display, etc.

In some embodiments, the wireless device UE 110 may comprise a series of modules configured to implement the functionalities of the wireless device described herein. Moreover, in some embodiments, the UE 110 may also comprise means for the functionalities described herein. A non-transitory computer readable medium with computer executable instructions stored thereon executed by the processor 220 of the UE 110 to perform the functionalities as described herein may also be provided.

It will be appreciated that the various modules may be implemented as combination of hardware and software, for instance, the processor, memory, and transceiver(s) of UE 110 shown in FIG. 2. Some embodiments may also include additional modules to support additional and/or optional functionalities.

FIG. 3 is a schematic diagram of an example of an apparatus for a radio access node 120 or network node 130. The apparatus may comprise at least one processor 220 and at least memory 230 storing computer program instructions that, when executed by the at least one processor 220, cause the apparatus to carry out the embodiments of the core network node 130 or radio access node 120 described herein. The example radio access node 120 or core network node 130 may include one or more of a transceiver 310, processor 320, memory 330, and network interface 340. In some embodiments, the transceiver 310 facilitates transmitting wireless signals to and receiving wireless signals from wireless devices, such as UE 110 (e.g., via transmitter(s) (Tx), receiver(s) (Rx), and antenna(s)). The processor 320 executes instructions to provide some or all of the functionalities described herein as being provided by the radio access node 120 or the core network node 130, the memory 330 stores the instructions executed by the processor 320. In some embodiments, the processor 320 and the memory 330 form processing circuitry. The network interface 340 may communicate signals to backend network components, such as a gateway, switch, router, Internet, Public Switched Telephone Network (PSTN), core network nodes or radio network controllers, etc.

The processor 320 may include any suitable combination of hardware to execute instructions and manipulate data to perform some or all of the described functions of the radio access node 120 or the core network node 130, such as those described herein. In some embodiments, the processor 320 may include, for example, one or more computers, one or more central processing units (CPUs), one or more microprocessors, one or more application specific integrated circuits (ASICs), one or more field programmable gate arrays (FPGAs) and/or other logic.

The memory 330 is generally operable to store instructions, such as a computer program, software, an application including one or more of logic, rules, algorithms, code, tables, etc. and/or other instructions capable of being executed by a processor 320. Examples of memory 330 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information. For example, the memory 330 includes computer program code causing the processor 320 to perform processing according to the methods described herein, e.g., the method of FIG. 5.

In some embodiments, the network interface 340 is communicatively coupled to the processor 320 and may refer to any suitable device operable to receive input for the radio access node 120 or the core network node 130, send output from the radio access node 120 or the network node 130, perform suitable processing of the input or output or both, communicate to other devices, or any combination of the preceding. The network interface 340 may include appropriate hardware (e.g., port, modem, network interface card, etc.) and software, including protocol conversion and data processing capabilities, to communicate through a network.

Other embodiments of the radio access node 120 or the network node 130 may include additional components beyond those shown in FIG. 3 that may be responsible for providing certain aspects of the node's functionalities, including any of the functionalities described herein and/or any additional functionalities (including any functionality necessary to support the solutions described herein). The various different types of radio access nodes or core network nodes may include components having the same physical hardware but configured (e.g., via programming) to support different radio access technologies, or may represent partly or entirely different physical components.

Processors, interfaces, and memory similar to those described with respect to FIG. 3 may be included in other nodes (such as UE 110, network node 120, etc.). Other nodes may optionally include or not include a wireless interface (such as the transceiver described in FIG. 3).

In some embodiments, the radio access node 120 or the core network node 130 may comprise a series of modules configured to implement the functionalities of the radio access node 120 or the core network node 130 described herein. Moreover, in some embodiments, the radio access node 120 or the core network node 130 may also comprise means for the functionalities described herein. A non-transitory computer readable medium with computer executable instructions stored thereon executed by the processor 320 of the network node 120/130 to perform the functionalities as described herein may also be provided.

It will be appreciated that the various modules may be implemented as combination of hardware and software, for instance, the processor, memory, and transceiver(s) of the radio access node 120 or the core network node 130 shown in FIG. 3. Some embodiments may also include additional modules to support additional and/or optional functionalities.

Before referring to FIGs. 4 to 13 and describing principles according to the disclosure, summarizing information and aspects related to the subject disclosure will be provided. It should be noted that all concepts described herein, although described, e.g., for one communication direction, e.g., for downlink communication, are applicable for the other direction as well, e.g., in the uplink (UL) communication. Moreover, concepts described for one entity, e.g., a UE 110, are applicable to another entity, e.g., a base station or network node 120, when considering for example another communication direction or another network setting as will be apparent to the skilled person.

Today's wireless communication systems require UEs 110 to perform radio measurements. Radio measurement data obtained by performing radio measurements relate, e.g., to channel properties of a communication link and may be information that can be measured directly, i.e., like a signal strength, but also comprises information calculated based on directly measured information, such as channel quality information and the like. Radio measurement data is, thus, collected on layer 1 (L1, physical layer, lower layer) of the respective network protocol. For example, in LTE and/or 5G, radio measurements may - beyond others - relate to channel status information (CSI). The reports of CSI (CSI-reports) to the network indicate how good or bad a measured channel of a specific reference signal (RS) is and, thus, how well the network is perceived by the UE 110 at a specific time. A CSI-report may comprise one or more of the following major components, also denoted as report quantities (which are, e.g., also listed and explained in 3GPP TS 38.214 v18.1.0): channel quality information (CQI), precoding matrix indicator (PMI), CSI-RS resource indicator, synchronization signal (SS) / physical broadcast channel (PBCH) resource block indicator (SSBRI), layer indicator (LI), rank indicator (RI) an/or L1-reference signal received power (RSRP).

There exist various reasons why a network seeks to collect radio measurement data from UEs 110. Most generally, radio measurements are typically used for supporting the functioning of a mobile network. For example, CSI (e.g., as configured with information element (IE) CSI-ReportConfig as described in 3GPP TS 38.331 v18.1.0, clause 6.3.2) is currently measured in real-time (i.e., immediately after receiving a channel/signal) and immediately (after suitable processing time) reported to the network or, more specifically, to a network node 120 to support selection of appropriate network nodes, channels, frequencies, beams, and the like. In other words, immediate radio measurement reports, such as the currently defined CSI-reports, are sent at every possible opportunity to use physical channel resources for reporting (e.g., configured PUSCH/PUCCH opportunity) since the radio measurement data may be time-critical for the operation of the network. However, radio measurements may also facilitate other purposes that are not that time-critical.

For example, recent developments in mobile communication consider the use of AI/ML models for beam management, for which evaluation results have shown that it is beneficial to enable AI/ML for beam management, but also for other applications. Generally speaking, there exist benefits of augmenting the air-interface with features enabling improved support of AI/ML based algorithms or, in other words, AI/ML models. AI/ML functionality over radio interface may be associated with life cycle management (LCM) of an AI/ML model, e.g., model training, model deployment, model inference, model monitoring, model updating, and the like.

In particular, in order to train these AI/ML models, physical layer data from UEs 110 may be used as training data. Physical layer data comprises L1 radio measurements, which include calculations based on L1 measurement data, such as channel status information (e.g., CQI, PMI, CRI, SSBRI, LI, and/or RI) and beam predictions. Currently, these reports can only be provided by the UE 110 in radio resource control (RRC) connected state on a physical uplink control channel (PUCCH) or a physical uplink shared channel (PUSCH) in immediately after real-time measurements, i.e., very frequently if data without holes in time is required. Hence, if the training of AI/ML models (or any other functionality at the network side) requires plenty of comprehensive physical layer data from the UEs 110, the air interface will be overloaded.

To overcome the large impact to air interface and signaling overhead due to these frequent report transfers, the adoption of a Minimization of Drive Tests (MDT)-like framework can be considered. In MDT (e.g., as described in 3GPP TS 32.422 v18.1.0), UEs 110 are tapped to collect field measurements to enable the network to use UEs 110 to collect mobile network data, and thus, reduce the need for traditional drive tests, which are associated with high costs, time commitments, and the requirement of providing access to areas with test vehicles. MDT can be categorized in immediate MDT and logged MDT.

The problem arising with usage of an MDT-like framework is that neither immediate MDT nor logged MDT as currently defined solve the issues indicated above. Immediate MDT, which can be used by UEs 110 in RRC connected mode is similar to classical immediate measurement reporting of CSI as described, e.g., in 38.214 v18.1.0, and does, thus, not help to reduce signaling overhead. Logged MDT could be justified approach, but it enables only logging of radio measurements that cannot be provided to the NW at the point of their generation because UE is in RRC idle state. It is not possible to simply apply the logging as defined for MDT in RRC connected state since radio measurements performed and provided for regular radio operation (i.e., report quantities of configured CSI-reports) would anyway be sent, which means that report quantities may be sent twice and require doubled efforts at the UE 110 and NW 120 to process the same metrics in two ways. None of the MDT types is useful for overcoming the signaling overhead and enabling a flexible data collection.

The solution disclosed herein introduces the possibility to flexibly configure and activate logged radio measurement reports, e.g., logged CSI-reports, which are not sent at every opportunity but store radio measurements, and - at the same time - to suppress (deactivate or not activate at least some or all) immediate radio measurement reports, e.g., immediate CSI-reports. The activation of logged radio measurement reports may be associated with a logged radio measurement report configuration that accommodates conditions for the UE determining how to log and when to report the radio measurements. The conditions may define what are the detailed criteria to trigger logging (storing) of radio measurements and what are the logged radio measurements reporting conditions, i.e., when to report the logged radio measurements.

In particular, the currently (e.g., in 5G) existing configurations of CSI-reports (as standardized, e.g., in 3GPP TS 38.331 v18.1.0, clause 6.3.2) define when to perform radio measurements and define the reporting opportunities on layer 1. For example, there is an indication, when reporting on PUCCH, which slots are used for reporting, e.g., based on an offset and/or a periodicity. The reporting opportunity for logged radio measurements can be more flexible, namely, on layer 1 and/or on layer 3. The reporting opportunities for the currently existing immediate CSI-reports may be fitting some collective time occasions on layer with the herein presented reporting opportunities for the logged CSI-reports. In some embodiments, the timing of the reporting opportunities on layer 1 for logged CSI-reports may also be defined as a multiplicity of the timing of immediate CSI-reports. For layer 3 reporting of logged CSI-reports, e.g., layer 3 timers may be used. Thus, it may simple to define longer time durations for reporting than for the immediate CSI-reports. The timing of reporting may also be independent from measurements, i.e., different to the measurement opportunity. Hence, layer 3 reporting for logged CSI-reports may be configured with a much longer periodicity or logging time than a respective reporting timer on layer 1. Moreover, the layer 1 message payload is smaller than for layer 3 messages, i.e., radio measurements of more time opportunities may be stored and reported over layer 3.

In some embodiments, the method may rely on RAN signaling in downlink (DL), e.g., in an RRC message, to facilitate the configuration of the UE 110, which enables radio measurements logging in RRC connected state and enables suppression (not activation/deactivation for the time of the logged measurements) of transmitting radio measurement results that are reported in a real-time otherwise. In some embodiments, the method introduces logged radio measurement report configuration that enables UE to log measurements, e.g., for CSI and beam prediction, also for UEs 110 in RRC connected state. The RAN (e.g., network node 120) may, in some embodiments, determine that logged data collection is required and send a logged radio measurement report configuration, so that the UE's physical layer data may - at least in part in some embodiments - be generated by radio measurements, but not be transmitted immediately after generation (e.g., as legacy immediate radio measurement reports), but rather once one or more logged reporting condition(s) for logged radio measurement reports are met.

This means that the UE procedures applied after configuration of logging for radio measurements imply that even though UE's physical layer generates the measurements (or measurement data), the generated measurements are first processed internally in the UE 110. The UE 110 may also store the radio measurements in the UE's memory up to predefined logged radio measurement reporting condition is detected.

In some embodiments, lower layer data (i.e. the data obtained by performing the radio measurement including postprocessing/calculation of parameters) can be provided internally to UE's upper layer (e.g., layer 3, RRC) for storing (logging) the data. The generation and transmission of the logged radio measurement report may then happen in the upper layer only after transmission criteria for logged radio measurement reports is satisfied. Alternatively, the radio measurements may be stored in the lower layer (e.g. L1, L2) and logged radio measurement reports are provided to the upper layer upon a reporting event is met or when the upper layer requests the logged radio measurement report. The UE 110 may also, in some embodiments, specifically preprocess the radio measurements and/or the logged radio measurement reports according to a specific purpose as configured by the network node 120 (e.g., internal AI/ML operations on data, data formatting, etc.).

The solution can be illustrated with the following (non-limiting) example. The gNB 120 may get involved in AI/ML-enabled functionality (offline) training. This may imply that the gNB 120 requests comprehensive radio measurement data from the UEs 110. In some embodiments, the gNB 120may then not request any radio measurement data in a real-time or may only require a limited set of radio measurement data in real-time. The gNB 120 triggers logged data collection from the UE 110 to get the sought metrics. Knowing the offline training purpose, gNB 120 differentiates that the respective radio measurements for the data collection purpose have no real-time delivery requirement, e.g., are not required for normal operation in a real-time manner.

For example, if the AI/ML-enabled functionality is beam management, the gNB may trigger CSI-reports for data collection from the UE to get CSI data and beam measurements. Contrary to the legacy framework, the CSI measurement results do not have to be delivered in real-time (immediately) but can be combined with logging triggers and reporting triggers to obtain logged CSI-reports. For this purpose, the gNB may send an RRC configuration with CSI-report configuration towards the UE.

In this example, to comply with legacy (i.e., release 18 and before) CSI-reporting framework, the CSI-ReportConfig Information Element may be reused or amended to configure the UE with CSI resources to measure and corresponding report quantities to generate (e.g., cri-RI-PMI-CQI, cri-RI-il, cri-RI-il-CQI, pdsch-BundleSizeForCSI, cri-RI-CQI, cri-RSRP, ssb-Index-RSRP, cri-RI-LI-PMI-CQI) for logging. In addition, the Information Element (IE) may also be extended to define the configured reporting quantity alongside with logging and reporting conditions. Example snippets how to amend or extend the CSI-ReportConfig IE, e.g., as defined in 3GPP TS 38.331 v 18. 1.0, are defined in the following Table 1.

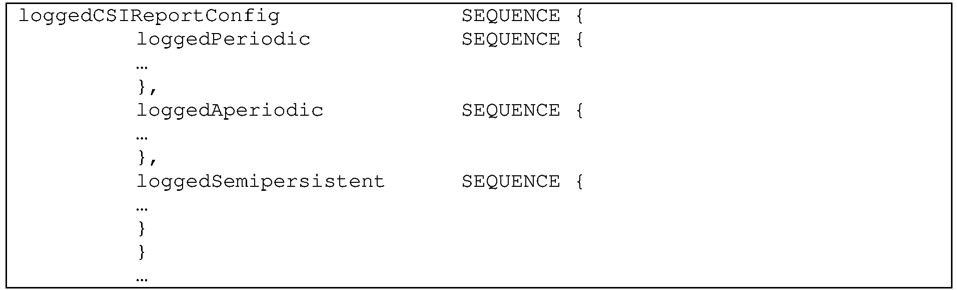

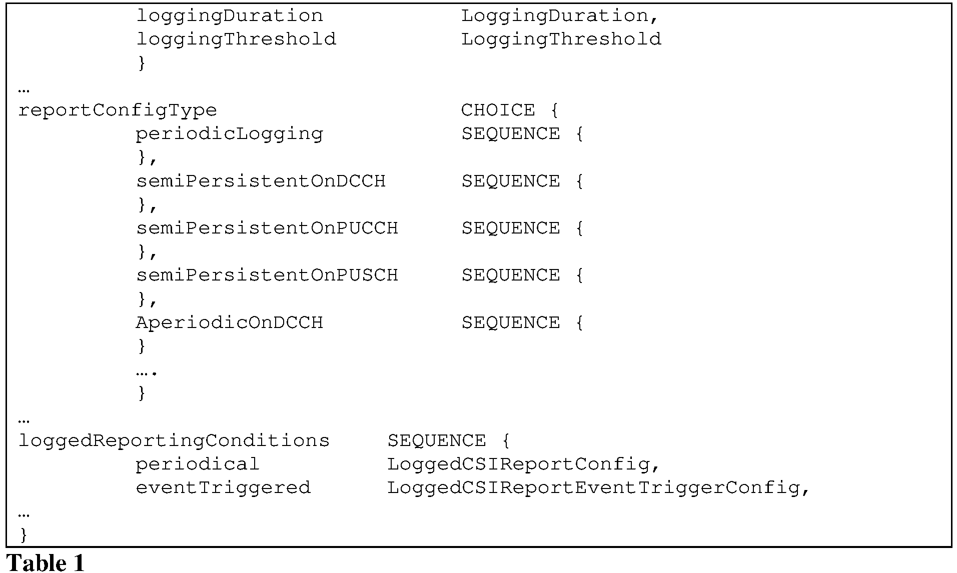

In this example, the configuration for logging CSI-reports differentiates the following:
- logging conditions, such as periodic, aperiodic, semipersistent logging trigger, logged aperiodic CSI Resource and associated CSI-report quantity, logged periodic CSI Resource and associated CSI-report quantity, and logged semi-persistent CSI Resource and associated CSI-report quantity;
- conditions for logging termination referring to an event definition or threshold, which upon detection should terminate logging procedure, e.g., a maximum allowed payload for report size, maximum UE's memory size for logging CSI-reports, or maximum timer for logging procedure; and
- reporting conditions that determine a condition for reporting initiation (periodical or event-based) and determining reporting channel to be PUSCH, PUCCH or DCCH.

The logged CSI-report configuration and activation for offline training may in such examples be split into several processes, namely, CSI-report logging and reporting configuration, (optional) immediate CSI-reports suppression, CSI-report measurements logging, and CSI-report reporting. The logged CSI-report configuration provision to the UE may imply that the reports are provided from the UE 110 to the gNB 120 upon certain logging condition is met and not in real-time as in legacy CSI-reporting procedure.

In some examples, further suppression of real-time, i.e., immediate CSI-reporting - even if still being configured - may be indicated implicitly or explicitly. For example, the suppression may be indicated implicitly by sending the logged CSI-report configuration to the UE 110 or by sending a logging activation command (activating the logging of CSI-reports) through a MAC control element (CE), which instructs the UE 110 to start collecting (logging) CSI-reports without sending them immediately over PUSCH or PUCCH. In other examples, upon sending the logged CSI-reports configuration, the gNB 120 explicitly suppresses the immediate CSI-reporting by sending a deactivation command (e.g., as MAC CE) for real-time CSI-report or by suppressing the transmission of a MAC CE for activating real-time reporting of CSI-reports.

With the procedures described herein relying on relaxed requirement for data collection for, e.g., offline training, the burden to the air interface can be reduced. RAN 120 can configure the UE 110 to log the necessary metrics and data and send them in a form of logged radio measurement reports at a lower frequency and optionally via an upper layer, instead of processing the immediate radio measurement reports with frequency in order of tens of milliseconds. Thus, training L1 measurement data may be obtained by the network in an efficient way during an active connection of the UE, but with limited burden on the air interface.

FIGs. 4 and 5 now present the most general processes of activating logging of radio measurements in a mobile communication system. FIG. 4 presents a flow chart of a method performed by a user equipment (e.g., UE 110). The UE 110 may be in RRC connected state and, thus, be able to receive messages from a network node 120.

First, as shown in box 401, the UE 110 receives, from the network node 120, a logged radio measurement report configuration. The radio measurement report configuration may indicate one or more logged radio measurement conditions. Logged radio measurement conditions may relate to any conditions indicating what to log, when to log, and how to perform radio measurements. The logged radio measurement report configuration may be received in a layer 3 radio resource control message.

Secondly, as shown in box 402, the UE 110 performs logged radio measurements as configured through the logged radio measurement report configuration. Such logged radio measurements may be activated through an indication to activate logged radio measurements. The indication to activate logged radio measurements may take several forms and may, e.g., be the logged radio measurement report configuration and/or a separate logged radio measurement report configuration activation command. Hence, the UE 110 may start logging directly after receiving the logged radio measurement report configuration or wait until it receives a respective logged radio measurement report configuration activation command.

The one or more logged radio measurement conditions may comprise at least one of a logged radio measurement trigger defining when to log radio measurements, a report defining a content of the logged radio measurements, and a logged radio measurement termination condition. The logged radio measurement trigger may comprise a periodic, an aperiodic, or a semipersistent logging trigger indicating when to log or when to start logging of radio measurements. Hence, the logged radio measurement trigger indicates which radio measurements to obtain and when the radio measurements are captured, processed, and stored.

A report quantity, i.e., content of the radio measurements, e.g., measurement values and/or calculated metrics, may be one or more of CQI, PMI, CRI, SSBRI, LI, RI, or other values/metrics obtained based on radio measurements. The logging termination condition may define when to stop logging measurements and may comprise at least one of a maximum payload size for the logged data report, a maximum memory size to be used for the logged radio measurements, or maximum time for logging the measurements.

The logged radio measurement report configuration may further indicate one or more logged radio measurement reporting conditions. The UE may, in response to determining that at least one (e.g., one, multiple, or all as being defined or specified before) of the one or more logged radio measurement reporting conditions is met, transmit a logged radio measurement report comprising the logged radio measurement data to the network node. In other words, in some embodiments, it may be defined that the logged radio measurement report is only transmitted if all of the defined one or more logged radio measurement reporting conditions are met, while in other embodiments, it may be defined that only some of the logged radio measurement reporting conditions have to be met for reporting. The one or more logged radio measurement reporting conditions may define an opportunity when the logged radio measurement report is to be transmitted and an uplink resource for transmission of the logged radio measurement report. The opportunity may comprise at least one of a periodical condition and an event-based condition. The uplink resource may, e.g., be PUCCH, PUSCH or DCCH, which may be a periodic resource, an aperiodic resource, or a semipersistent resource. This means that the logged radio measurement reporting conditions defined whether the logged radio measurement reports are transmitted periodically (i.e., at a specific periodicity) or event-triggered (e.g., threshold of maximum logged data has been reached, network node 120 requests logged radio measurement report, or the like).

As said, the logged radio measurement report configuration may be received as RRC message, e.g., in an RRC IE, such as the CSI-ReportConfig IE as described above. The UE 110 may then provide the logged radio measurement report configuration (or at least part of it) from layer 3 to layer 1 since the radio measurements are performed in layer 1. The logged radio measurement report configuration (or a respective part of it) may then be stored in layer 1 and read when required for performing radio measurements.

The logged radio measurement report may at least in part transmitted in a layer 3 radio resource control message and/or at least in part transmitted as layer 1 physical layer uplink control information (e.g., via PUSCH, PUCCH, and the like). In some examples, the logged radio measurement report, which may be significantly larger than a (legacy) immediate radio measurement report, may be sent in two distinct messages, one message comprising a part of the content on layer 1 and one message comprising another part of the content on layer 3. Where to transmit the logged radio measurement report may also be dynamic or configurable such that up to a specified size (e.g., less or equal to 1 kBit) of the report, the logged radio measurement report may be transmitted on layer 1 (e.g., as uplink control information on PUSCH/PUCCH), and if the report has a size larger than the specified size (e.g., larger 1 kBit onwards), the logged radio measurement report may be transmitted on layer 3.

If the logged radio measurement report is (at least in part) transmitted via a layer 3 RRC message, the UE 110 may obtain radio measurements according to the logged radio measurement report configuration (i.e., according to the logged radio measurement conditions), and provide at least a part of radio measurements from layer 1 to layer 3 for logging (i.e., storing) over time. Radio measurements may relate to measured channel properties, i.e., raw data and/or calculated metrics thereof, additionally with further included data and possibly in the form of a compiled kind of radio measurement report, similar to a legacy immediate radio measurement report. In other embodiments, the UE 110 may not provide (at least a part of) the radio measurements from the lower to the upper layer but may generate (at least a part of) the final logged radio measurement report in layer 1 and provide the generated (at least a part of the) logged radio measurement report from layer 1 to layer 3 for transmission. The UE 110 may provide the logged radio measurement report and/or the radio measurements from the lower layer to the upper layer upon logged radio measurement condition(s) apply (i.e., for each measurement sample in time), upon a logging termination condition is met, or upon one or more logged radio measurement reporting conditions are met. The upper layer may also request logged radio measurement data and/or logged radio measurement report if it determines that one or more logged radio measurement reporting condition are met. As is apparent, if radio measurements are stored in part in layer 1 and in part in layer 3 in these embodiments, in which the logged radio measurement report is transmitted via layer 3 RRC message, the radio measurements stored in the different layers may be mutually exclusive to avoid double storing and reporting.

In some embodiments, the UE 110 may also receive, from the network node, at some point in time a logged radio measurement report deactivation command, which deactivates transmission of logged radio measurement reports with respect to all or part of respective configured report quantities. This enables the network node 120 to also stop data collection and - possibly - start/continue legacy immediate radio measurement reporting.

If the UE was already configured for immediate radio measurement reporting (e.g., as described above for providing real-time CSI-reports), the indication to activate logged radio measurements (e.g., the logged radio measurement configuration or a separate MAC CE) further may be an immediate radio measurement report deactivation command indicating a deactivation of immediate radio measurements. Alternatively, the deactivation of immediate radio measurements may be indicated by a MAC CE indicating an immediate radio measurement report deactivation command. Yet alternatively, the immediate radio measurement reports may not be deactivated or only part of the content may be omitted. This may be considered in the logged radio measurement report configuration, in an immediate radio measurement report configuration, in another radio measurement report configuration (e.g., which comprises both, the logged radio measurement report configuration and the immediate radio measurement report configuration), or yet a separate message. If the UE 110 receives such an immediate radio measurement report deactivation command, the UE 110 may transition from immediate radio measurements to logged radio measurements.

The UE 110 may receive the immediate radio measurement report configuration, which may indicate one or more immediate reporting conditions in the same or a separate message as the logged radio measurement report configuration. The UE 110 may then directly or upon receiving an immediate radio measurement report activation command (for activating the immediate radio measurement report configuration), perform radio measurements and, in response to determining that at least one (e.g., one, multiple, or all as being defined or specified before) of the one or more immediate reporting conditions is met, transmit an immediate radio measurement report comprising the latest radio measurements to the network node. Hence, for immediate radio measurement reporting, no storing of measurements is performed.

In some embodiments, the logged radio measurements are configured to be performed more frequently over time, reported less frequently and/or reported after a greater period in time than the immediate radio measurements. For example, the logged radio measurement reports may be configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.

In some further embodiments, the logged radio measurement reports may include at least one additional report quantity compared to the immediate radio measurement reports. This flexibility to configured reporting times and report quantities differently for logged and immediate radio measurement reporting is achieved by providing the UE 110 with two distinct configurations, in some embodiments comprised in one RRC message, e.g., in a channel status information report configuration information element, CSI-ReportConfig IE (as described above), which allow activation and deactivation of one or the other flexibly, e.g., by sending respective activation and deactivation commands. If the UE 110 is configured to log and immediately report radio measurements during the same time period, the logged radio measurement reports transmission of immediate radio measurement reports, which are usually smaller than the logged radio measurement reports) may be prioritized over transmission of logged radio measurement reports. Hence, if both transmissions are scheduled for the same transmission time, the immediate radio measurement report is prioritized since such reports usually comprise measurement data required for usual operation. The transmission of the logged radio measurement report may be postponed, e.g., to the next possible transmission slot or according to configured conditions.

A content of the logged radio measurements may in some embodiments comprise at least one of channel status measurements and beam measurements. As is apparent, the content may, in some embodiments, be defined by the logged radio measurement conditions, namely, as report quantities. The channel status measurements may comprise one or more of channel quality information, a precoding matrix indicator, a channel state information resource indicator, a synchronization signal block, a layer indicator, a rank indicator, and a level 1 reference signal received power. This said, the channel status measurements may relate to CSI report quantities as described above. The beam measurements may comprise beam predictions, e.g., determined by the UE 110 by AI/ML algorithms.

Now turning to FIG. 5, which shows the basic network-side processes. It is noted that all explanation given for FIG. 4 also apply to the processes/messages/configurations as described with respect to FIG. 5.

The network node 120, in the following also denoted as NW 120 determines, as shown in box 501, that data collection of logged radio measurement is to be initiated (at some point in the future) with the UE 110. Hence, the NW 120 may determine that it will at some point in the future (e.g., now or later) plan to obtain logged radio measurements from the UE 110, e.g., because the NW 120 needs training data for AI/ML model training or the like. In some embodiments, the NW 120 may also generally configure at least some UEs for logged radio measurement reporting.

As shown in box 502, the NW 120 then transmits logged radio measurement report configuration to the UE 110. In some embodiments, this may already indicate to the UE 110 to perform logged radio measurements but the NW 120 may also transmit a further logged radio measurement report activation command to the UE 110. The logged radio measurement report configuration may be received in a layer 3 radio resource control message.

The logged radio measurement report configuration may further indicate one or more logged radio measurement reporting conditions (e.g. those described with respect to FIG. 4) and the NW 120 may further receive a logged radio measurement report comprising logged radio measurements from the user equipment according to the one or more logged radio measurement reporting conditions. The logged radio measurement report may be at least in part received in a layer 3 radio resource control message and/or the logged radio measurement report may also be at least in part transmitted as layer 1 physical layer uplink control information as also described with respect to FIG. 4. The NW 120 may also transmit, to the UE 110, a logged radio measurement report deactivation command for deactivating transmission of logged measurement reports with respect to all or part of respective configured report quantities.

The indication to activate logged radio measurements may further be an immediate radio measurement report deactivation command indicating a deactivation of immediate radio measurements. Alternatively, a deactivation of immediate radio measurements may be indicated by a MAC CE indicating an immediate radio measurement report deactivation command. In embodiments, the NW 120 may transmit, to the UE 110, an immediate radio measurement report configuration indicating one or more immediate reporting conditions for performing radio measurements and correspondingly receives, from the UE 10, an immediate radio measurement report comprising the latest radio measurements according to the immediate radio measurement report configuration.

In some embodiments, the NW 120 may transmit, to the UE 110, an immediate radio measurement report configuration activation command for activating the immediate radio measurement report configuration for starting performing radio measurements and transmitting immediate radio measurement reports. If the NW 120 has configured the UE 110 with immediate radio measurement reporting, the logged radio measurements as configured with the logged radio measurement report configuration may be performed more frequently in time but reported less frequently in time than the immediate radio measurements. In other words, the frequency (e.g., periodicity in symbols, slots, etc.) at which radio measurements for logging are obtained can be higher than the frequency at which immediate radio measurements are obtained. At the same time, the transmission rate, i.e., how often reports are sent to the network node 120, can be lower for the logged radio measurements since the radio measurements are logged and not reported at any reporting opportunity as the immediate radio measurement reports.

The immediate measurement report configuration and the logged radio measurement report configuration may be received within one message. The logged radio measurement configuration and/or the immediate measurement report configuration may be included in a channel status information report configuration information element, CSI-ReportConfig IE as described above.

The logged radio measurements may comprise at least one of channel status measurements and beam measurements. The channel status measurements may further comprise one or more of channel quality information, a precoding matrix indicator, a channel state information resource indicator, a synchronization signal block, a layer indicator, a rank indicator, and a level 1 reference signal received power. The beam measurements may comprise beam predictions as has also been described with respect to FIG. 4.

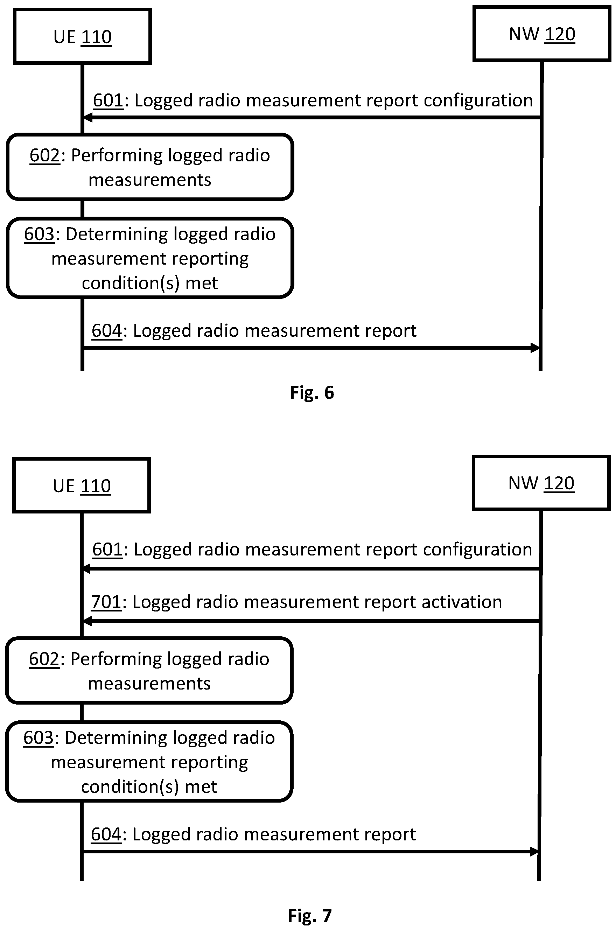

Now turning to FIGs. 6 to 13, which show message flow diagrams for some more particular embodiments. It is noted that for all processes shown in FIGs. 6 to 13, the UE 110 may remain in RRC connected mode and that aspects described for FIGs. 4 and 5 can be applied to the following message flows of FIGS. 6 to 13.

FIG. 6 shows a message flow diagram of implicitly activating logged radio measurements according to an embodiment of the disclosure. The NW 120 may transmit logged radio measurement report configuration (arrow 601). This configuration may comprise one or more logged radio measurement conditions and/or one or more logged radio measurement reporting conditions. The logged radio measurement report configuration may, e.g., be included in a CSI-ReportConfig IE as explained above.

The UE 110 may then perform logged radio measurements (box 602) over time (i.e., multiple radio measurements are processed and stored). If the UE 110 determines that one or more of the radio reporting conditions are met (box 603), the UE 110 may transmit a logged radio measurement report comprising the logged radio measurements (arrow 604) to the NW 120.

In this example, the reception of the logged radio measurement report configuration (in arrow 601) is an implicit indication to activate logged radio measurements. Hence, the UE may directly start logging of radio measurements according to the logged radio measurement report configuration.

FIG. 7 shows a message flow diagram of explicitly activating logged radio measurements according to an embodiment of the disclosure. The NW 120 may transmit logged radio measurement report configuration (arrow 601). This information may comprise one or more logged radio measurement conditions and/or one or more logged radio measurement reporting conditions. The UE 110 may not directly start performing logged radio measurements but only after reception of a logged radio measurements report activation command (box 701), which may, e.g., be a MAC CE or downlink control element transmitted over PUCCH or PUSCH. Then, the UE 110 may log again radio measurements over time (box 602). If the UE 110 determines that one or more of the radio reporting conditions are met (box 603), the UE 110 may transmit a logged radio measurement report comprising the logged radio measurements (arrow 604) to the NW 120.

In this example, the reception of the logged radio measurement report configuration (in arrow 601) is not an indication to activate logged radio measurements but the reception of the logged radio measurement report activation (in arrow 701). Such a logged radio measurement report activation may be a MAC CE or downlink control element transmitted over PUCCH or PUSCH. This gives the NW 120 flexibility to start logging at any time.

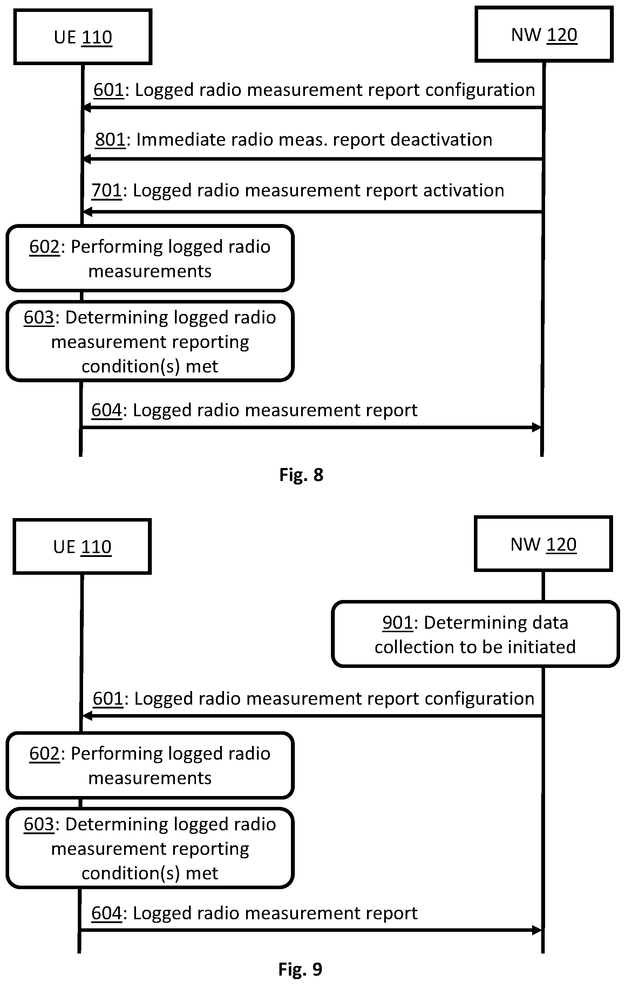

FIG. 8 shows a message flow diagram of explicitly deactivating immediate radio measurements according to an embodiment of the disclosure. In this example, the UE 110 again may receive a logged radio measurement report configuration (arrow 601). Additionally, the UE 110, which was previously been configured for providing immediate radio measurement reports, may also receive from the NW 120 an immediate radio measurement report deactivation command (arrow 801). This immediate radio measurement report deactivation command may be a MAC CE or a downlink control element transmitted over PUCCH or PUSCH. In an alternative embodiment (not shown), the immediate radio measurement report deactivation command may be implicitly comprised by receiving the logged radio measurement report configuration. Hence, arrows 601 and 801 may be one single message. The immediate radio measurement report deactivation command leads to that no further immediate radio measurement reports are generated at the UE 110.

After the UE 110 received the logged radio measurement report activation command (arrow 701), the UE 110 may perform logged radio measurements (box 602) over time (i.e., multiple radio measurements are processed and stored). If the UE 110 determines that one or more of the radio reporting conditions are met (box 603), the UE 110 may transmit a logged radio measurement report comprising the logged radio measurements (arrow 604) to the NW 120. In this example, the NW 120 can flexibly control when and whether to deactivate immediate radio measurement reports before activating logged radio measurement reports.

FIG. 9 shows a message flow diagram including determination of data collection requirement according to the disclosure. In this example, the NW 120 may first determine that logged data collection is to be initiated with the UE 110 (box 901). In some embodiments, this may comprise the detection of AI/ML enabled functionality for beam management activation in the NW 120 and the determination that there is no time-critical requirement for the data because of an, e.g., AI/ML model training purpose. NW 120 may then transmit the logged radio measurement report configuration (arrow 601) and the UE 110 may perform logged radio measurements (box 602) over time. If the UE 110 determines that one or more of the radio reporting conditions are met (box 603), the UE 110 may transmit a logged radio measurement report comprising the logged radio measurements (arrow 604) to the NW 120. It is noted that the processes 601 to 604 are according to FIG. 6 but may also follow any of the other message flow diagrams of FIGs. 7, 8, 10 to 13.

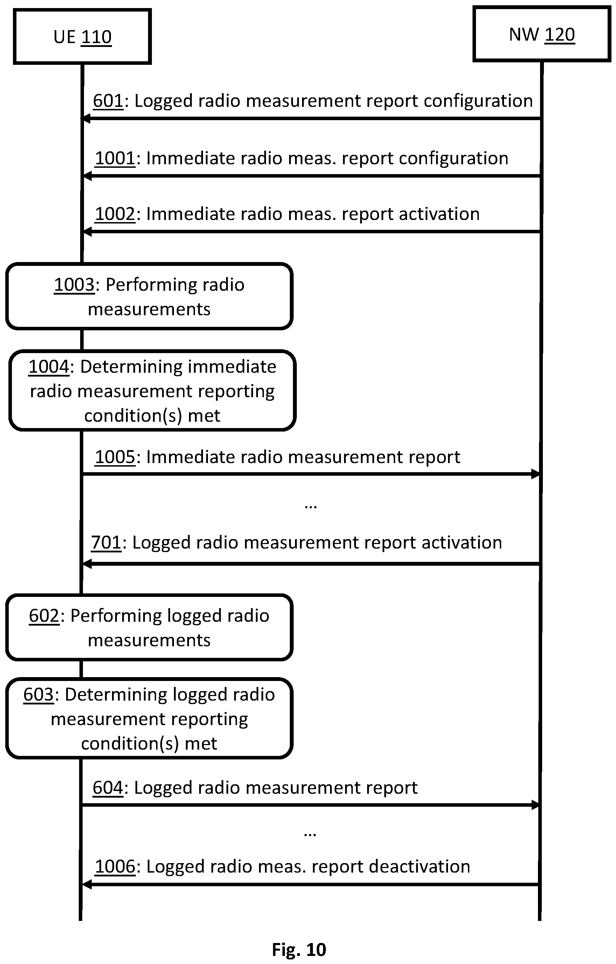

FIG. 10 shows a message flow diagram of dynamically switching between immediate and logged radio measurements according to an embodiment of the disclosure. The UE 110 may again receive the logged radio measurement report configuration (arrow 601). Additionally, the UE 110 may also receive an immediate radio measurement report configuration (arrow 1001). It is noted that - although not shown, both configurations may be received within one message, i.e., arrows 601 and 1001 may form a single message. In embodiments, this message may be an RRC message. Both configurations may also be comprised within a single IE, e.g., the CSI-ReportConfig IE as explained above. The immediate radio measurement report configuration may also comprise one or more immediate radio measurement conditions and/or one or more immediate radio measurement reporting conditions, which may or may not be similar to the conditions defined for logging.

The UE 110 may then receive an immediate radio measurement report activation command (arrow 1002). This immediate radio measurement report activation command may e.g., a MAC CE or downlink control information on PUSCH or PUCCH indicating to start immediate radio measurement reporting, e.g., as defined in current 3GPP 5G standards of release 18 for CSI-reports. In some embodiments, this immediate radio measurement report activation command may also be implicitly comprised by receiving the immediate radio measurement report configuration (in arrow 1001), i.e., the UE may start immediate radio measurement reporting (box 1003) directly after receiving the immediate radio measurement report configuration or - as shown in FIG: 10, after receiving the immediate radio measurement report activation command.

When the UE 110 determines that immediate radio measurement reporting conditions are met (box 1004), the UE 110 may transmit an immediate radio measurement report to the NW 120 (box 1005). As indicated by the three dots, these immediate radio measurements and respective reports may be performed for a longer time on a periodic, aperiodic, or semipersistent basis. In some embodiments, the processes 1003 to 1005 are similar to what is currently defined in 3GPP 5G standards of release 18 for CSI-reports.

At some point in time, the UE 110 may receive a logged radio measurement report activation command (arrow 701). In this example, the logged radio measurement report activation command also constitutes an implicit deactivation command for the immediate radio measurement reports, which are, thus, not transmitted anymore during a logging phase, which may comprise the UE 110 performing logged radio measurements (box 602), determining that logged radio measurement reporting conditions are met (box 603), and transmitting the logged radio measurement report (arrow 604). Processes 602 to 605 may also be repeated for a longer time until a logged radio measurement report deactivation command is received by the UE 110 (arrow 1006). In some embodiments, the logged radio measurement report deactivation command, which may again be a MAC CE or downlink control information on PUSCH/PUCCH, may also implicitly indicate activation of immediate radio measurement reporting again.

The example of FIG. 10 provides measures for the NW 120 to avoid immediate radio measurement reports during logging and to transition from immediate to logged and from logged to immediate radio measurement reporting.

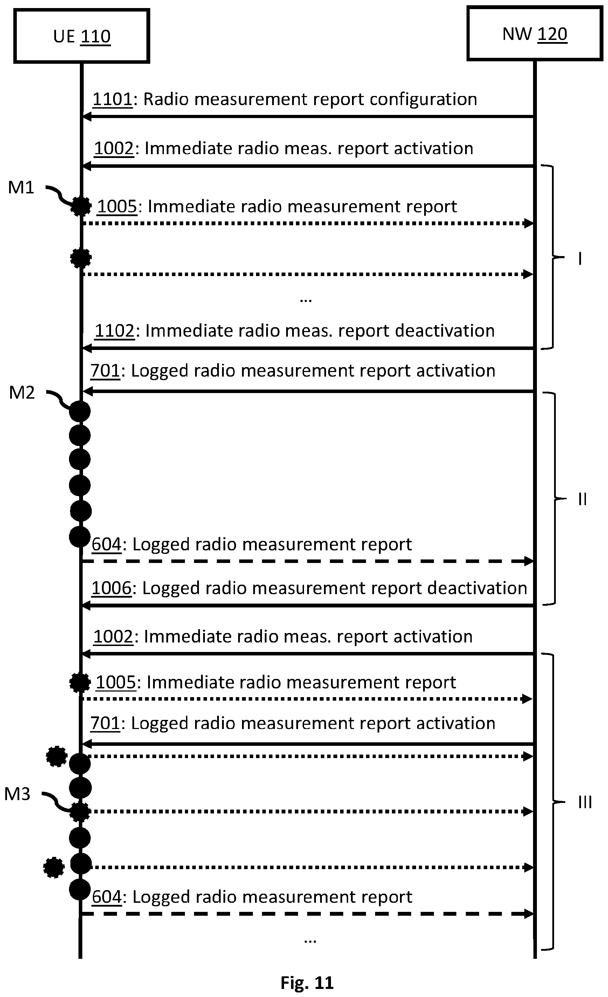

FIG. 11 shows a message flow diagram of dynamically switching between immediate and logged radio measurements and combining them according to an embodiment of the disclosure. In this embodiment, the UE 110 may receive a radio measurement report configuration (arrow 1101), which may comprise logged radio measurement report configuration and/or immediate radio measurement report configuration, i.e., it may be considered as a combination of arrows 601 and 1001. The UE 110 may further receive from the NW 120 an immediate radio measurement report activation command as described with respect to FIG: 10. In response to this, the UE may perform immediate radio measurements M1 (which may comprise the boxes 1003 and 1004 as described with respect to FIG. 10) and transmits the respective immediate radio measurement report (arrow 1005). It is noted that immediate radio measurement reports are indicated with dotted arrows in this figure. As can be seen, there may be several instances of immediate radio measurements and respective reports in a phase I. At the end of this phase, the NW 120 may deactivate the immediate radio measurement reporting with an immediate radio measurement report deactivation command (arrow 1102).

A logged radio measurement report activation command may then activate logging (arrow 701) and start a phase II. It is noted again that this is only and example, and the processes and principles of other figures can be applied as well. For example, arrows 1002 and 701 may be one message that serves as both as explained for FIG. 10. Or arrow 1002 may be omitted because message 1101 may already indicate to activate immediate radio measurement reports as also explained before.

The UE 10 may then perform logged radio measurements M2 (which may comprise the box 602 and at a later point in time before reporting also the box 603 as described with respect to FIG. 10). These measurements are logged/stored over a time period until a logged radio measurement report is transmitted to the NW 120 (arrow 604). It is noted that logged radio measurement reports are indicated with dashed arrows in this figure. The phase II may end with a transmission of a logged radio measurement report deactivation command (arrow 1006).

Hence, to summarize FIG. 11 until here, phase I reflects only immediate radio measurements and respective reports, whereas phase II reflects only logged radio measurements and respective reports. In a next phase III, the NW 120 instructs the UE 110 to perform both types of measurements and reports.

The NW 120 may transmit again an immediate radio measurement report activation (arrow 1002). The UE 110 may perform measurements and transmit immediate radio measurement reports (arrow 1005). The NW 120 then may also transmit a logged radio measurement report activation to the UE 110 (arrow 701), which does not indicate as in FIG. 10 also a deactivation of immediate radio measurement reports since such deactivation is to be signaled explicitly (see arrow 1102 in phase I). Thus, in phase III, immediate and logged radio measurement reporting may be active. This can be seen in that the dotted arrows (being immediate radio measurement reports) are still transmitted (e.g., periodically) during the logging phase. As can be seen, the UE 110 may have some radio measurements M3 at some times, which provide data for immediate radio measurement reports but (usually) other data is logged. The UE may then also transmit a logged radio measurement report (arrow 604) in phase III.

It is noted that, if both types of measurement reports (i.e., immediate and logged) are configured and activated at the same time, which may be advantageous since some measurement report quantities may be necessary to be reported in real-time but some others may only be required for logged data collection, the NW 120 may configure the report quantities of both types accordingly that no measurement report quantity is transmitted twice. In such examples, the NW 120 may also log radio measurements received in immediate radio measurement reports and merge this data with data received in logged radio measurement reports. It may also be advantageous to configure the report quantities of the immediate radio measurement reports to be an absolute minimum for ensuring good operation of the communication link when combining immediate and logged radio measurement reporting.er

Although phases I, II, and III are shown in one message flow diagram, the NW 120 and/or the UE 110 may only support some of the phases, e.g., only I and II but not III. It may also happen, that phase I, i.e., immediate radio measurement reporting cannot be suppressed and phases I and III are always supported. This may depend on the wireless communication network, area, supported standard releases, and the like.

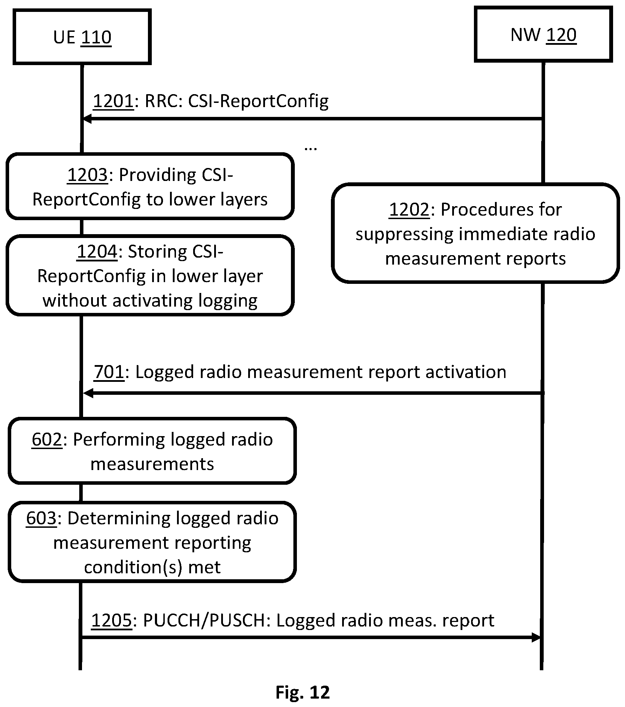

FIG. 12 shows a message flow diagram of a possible implementation in connection with channel status information reporting according to the disclosure. The NW 120 may transmit an RRC message comprising an adapted CSI-ReportConfig IE as described above (arrow 1201). The CSI-ReportConfig IE is an example of a radio measurement report configuration and comprises logging conditions (corresponding to logged radio measurement conditions as described above) and reporting conditions (corresponding to logged radio measurement reporting conditions) for logged CSI-reports. The CSI-ReportConfig IE may also comprise similar conditions and configuration for immediate radio measurement reports, i.e., real-time CSI-reports as described above.

The NW 120 may start procedures for suppressing immediate radio measurement reports if needed (box 1202). For example, the NW 120 may transmit deactivation commands for immediate radio measurement reports as described with respect to FIG. 11 (explicit suppression/deactivation) or omits transmission of activation commands of immediate radio measurement reports, e.g., suppresses requests for real-time CSI-reports in MAC CEs (implicit suppression/deactivation). The NW 120 may also decide not to start procedures for suppressing immediate radio measurement reports as described with respect to FIG. 11. The NW 120 also decides that a MAC CE CSI-Reports logging command should be transferred to the UE 110, which results in transmission of the logged radio measurement report activation command (arrow 701).

After receiving the CSI-ReportConfig (in arrow 1201), the UE 110 may provide the CSI-ReportConfig from RRC layer 3 to lower layers, e.g., layer 1 (box 1203), where it may be stored without activation of logging (box 1204). Additionally (now shown), the CSI-ReportConfig may also be stored in layer 2 or layer 3. After reception of the logged radio measurement report activation command (arrow 701), the UE 110 - as described before - may perform logged radio measurements (box 602), in this example, relating to the initiation of CSI measurements and logging according to the logging and reporting conditions (received with arrow 1201). In other words, the UE's lower layer may receive logging conditions as information provided by upper layer configuration and generate log samples according to the logging triggers without sending the reports to the NW 120 (as it would be the case with immediate radio measurement reporting).

The UE 110 may then determine that logged radio measurement reporting condition(s) are met (box 603). In this example, these conditions may be defined in a parameter loggedReportingConditions in the CSI-ReportConfig IE (e.g., a periodical and/or event-basedcondition). Then, the UE 110 sends logged CSI-Reports (corresponding to logged radio measurement reports in other figures) similarly to real-time CSI-Reports, namely, vial PUCCH or PUSCH (arrow 1205).

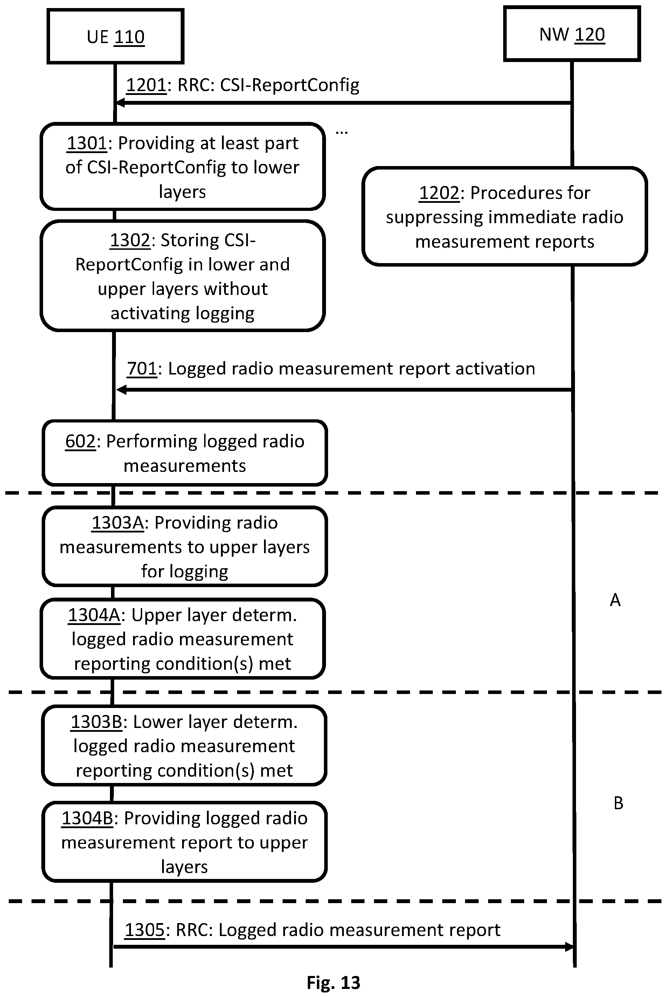

FIG. 13 shows a message flow diagram of two further possible implementations in connection with channel status information reporting according to the disclosure. The NW 120 may transmit an RRC message comprising an adapted CSI-ReportConfig IE as described above (arrow 1201). The NW 120 may start procedures for suppressing immediate radio measurement reports if needed (box 1202). These processes are similar to the one described with respect to FIG. 12.

After receiving the CSI-ReportConfig (in arrow 1201), the UE 110 may now provide at least part of the CSI-ReportConfig from RRC layer 3 to lower layers, e.g., layer 1 (box 1301) For example, only the logged (and immediate) radio measurement conditions may be provided to lower layers but the logged (and immediate) radio measurement reporting conditions may not. Of course, also the whole CSI-ReportConfig (as in FIG. 12) may be provided to the lower layer(s).

The CSI-ReportConfig (or repective parts of it) may be stored - in this example also without activation of logging - in upper and lower layers (box 1302). After reception of the logged radio measurement report activation command (arrow 701), the UE 110 - as described before - may perform logged radio measurements (box 602), in this example, relating to the initiation of CSI measurements and logging according to the logging and reporting conditions (received with arrow 1201). In other words, the UE's lower layer may receive logging conditions as information provided by upper layer configuration and generate log samples according to the logging triggers without sending the reports to the NW 120 (as it would be the case with immediate radio measurement reporting).

FIG. 13 then depicts two different alternatives. In alternative A, the lower layer(s) performing the measurements may provide the radio measurements to upper layers for logging (box 1303A). This means, the upper layers (e.g., layer 3) may store/log the radio measurements. In this alternative, the upper layers may then determine that one or more logged radio measurement reporting conditions are met (box 1304A), generate the logged radio measurement report and transmit it as RRC message to the NW 120 (arrow 1305).

In alternative A, the lower layer(s) performing the measurements may store the radio measurements and determine that one or more logged radio measurement reporting conditions are met (box 1303B). The lower layers then generate the logged radio measurement report and provide it to the upper layers, e.g., layer 3 (box 1304B), which may transmit the report as RRC message (e.g., over DCCH as explained above) to the NW 120 (arrow 1305).

Hence, depending on the capabilities of the UE 110, different processes can be implemented how the logging and reporting can be achieved. This allows flexibility to the UEs 110 and does not affect the data collection for the NW 120.

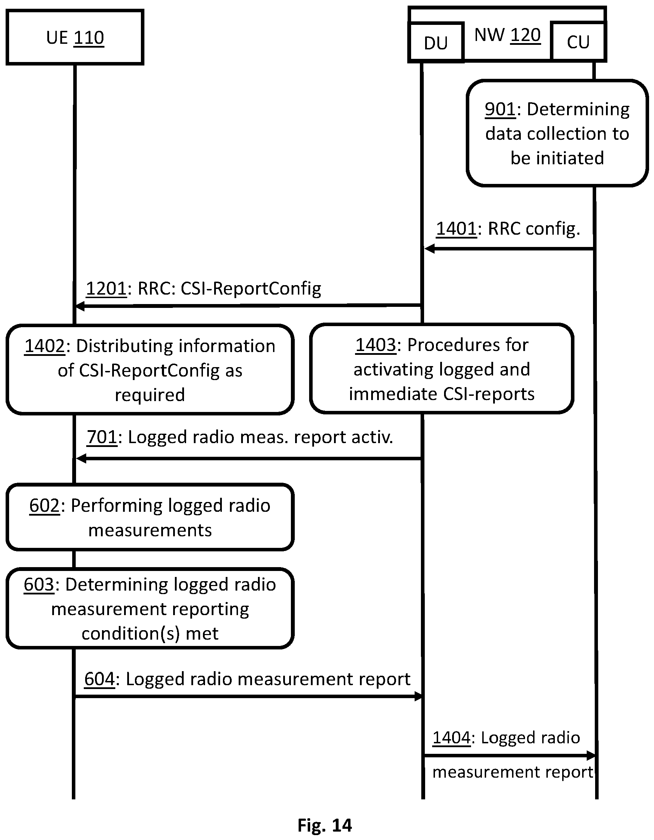

FIG. 14 shows a message flow diagram depicting internal processes of a network node, e.g., processes between the RAN distributed unit (DU) and the RAN central unit (CU) of the NW 120, i.e., of a RAN 120. The detailed procedures steps are as follows:

CU may determine that data collection is to be initiated with the UE 110 at some point in time (box 901). For example, the CU may determine the need to trigger AI/ML enabled functionality for beam management and that the trigger is not associated with a time-critical requirement, e.g. for model training purposes. The CU may then send an RRC configuration (arrow 1401), e.g., a CSI-ReportConfig to the DU to trigger the configuration of CSI-reports at the DU, that is, the DU is triggered to configure data collection with the UE 110 according to the generated RRC configuration.

DU may forward the RRC configuration message with the CSI-ReportConfig comprising logged radio measurement conditions and logged radio measurement reporting conditions for CSI-reports to the UE 110 (arrow 1201). The UE 110 may then distribute and process the information received with the CSI-ReportConfig as required (box 1402), e.g., as described above. For example, the UE 110 may store CSI measurement conditions and CSI measurement reporting conditions as explained with respect to FIGs. 12 and 13.

The DU may also perform some procedures for activating of logged and/or immediate CSI-reports (box 1403) as described above. For example, the DU may determine that RRC configuration for logged and immediate CSI-reports has been sent and that the UE 110 got an instruction for both types of reports, but will not activate RRC configuration unless explicitly activated by, e.g., a logged (or immediate) radio measurement report activation command. In some embodiments, the DU may send an immediate radio measurement report activation command as, e.g., shown in FIG. 10 and FIG. 11. If both types of reports are activated, the immediate radio measurement reports may be configured to be reported with a reduced set of report quantities compared to the logged radio measurement reports as described above.

The DU may send a logged radio measurement report activation command for activating logged time CSI-reports (arrow 701) at some point in time, when logging should be activated at the UE 110. The UE 110 may then initiate CSI measurements and reporting according to the measurement and reporting conditions (immediate or/and logged). In particular, the UE 110 may perform logged radio measurements (box 602) as also described before and distribute the radio measurements and/or logged radio measurement reports between its layers as described, e.g., with respect to FIG. 12 and FIG 13.

The UE 110 may determine that logged radio measurement reporting condition(s) are met (box 603). For example, the UE 110 may determine that a condition for logged reporting initiation (e.g., loggedReportingConditions) as provided in CSI-ReportConfig is met and sends logged CSI-reports over PUSCH or PUCCH (or over DCCH as RRC message as described above). Additionally, the UE 110 may at some other points or at the same point in time also determine that a condition for reporting initiation (e.g. classical CSI-ReportConfig reportType) as provided on CSI measurements configuration (e.g. aperiodical, semipersistent etc.) is met and sends immediate CSI-Reports over PUSCH or PUCCH.

The UE 110 then generates and sends at least a logged radio measurement report (arrow 604) to the DU. The DU forwards the logged radio measurement report to the CU (arrow 1404) The UE 110 may at the same time as arrow 604 also send an immediate radio measurement report (not shown). In this case, the DU may combine the two types of CSI-reports into a logged CSI-report and send it to CU (similar to that in arrow 1404).

The herein described procedures may be applied per model or per functionality level (identified by an identifier) or across models or functionalities of a given entity, e.g., as a UE feature. It should be understood that the apparatuses described herein may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to LTE and 5G NR, similar principles may be applied in relation to other networks and communication systems where enforcing fast connection re-establishment is required. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes exemplary embodiments, there are several variations and modifications which may be made to the disclosed solution without departing from the scope of the subject disclosure.

In general, the various exemplary embodiments may be implemented in hardware or special purpose circuits, software, logic or any combination thereof. Some aspects of the subject disclosure may be implemented in hardware, while other aspects may be implemented in firmware or software which may be executed by a controller, microprocessor or other computing device, although the subject disclosure is not limited thereto. While various aspects of the subject disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Example embodiments of the subject disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the figures may represent program processes, or interconnected logic circuits, blocks and functions, or a combination of program processes and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASICs), FPGA, gate level circuits and processors based on multicore processor architecture, as non-limiting examples.

Example embodiments of the subject disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Moreover, in accordance with the foregoing description, the following three sets of clauses reflect possible embodiments of the herein presented solution, which are further combinable between the sets of clauses. These clauses do not define the scope, which is defined by the appended claims.

### First set of clauses:

1. Method of radio measurements performed by a user equipment in radio resource control connected state, the method comprising:
   - receiving, from a network node, a logged radio measurement report configuration indicating one or more logged radio measurement conditions; and
   - in response to an indication to activate logged radio measurements, performing logged radio measurements according to the one or more logged radio measurement conditions.
2. The method of clause 1, wherein the logged radio measurement report configuration further indicates one or more logged radio measurement reporting conditions, the method further comprising:
   - in response to determining that at least one of the one or more logged radio measurement reporting conditions is met, transmitting a logged radio measurement report comprising the logged radio measurements to the network node.
3. The method of clause 2, wherein the logged radio measurement report is at least in part transmitted in a layer 3 radio resource control message.
4. The method of clause 3, wherein performing logged radio measurement comprises:
   - obtaining radio measurements according to the logged radio measurement report configuration;
   - providing at least a part of the radio measurements from layer 1 to layer 3 for storing over time; and
   - generating, at layer 3, at least a part of the logged radio measurement report based on the at least a part of the radio measurements stored in layer 3 for transmission.
5. The method of clause 3 or clause 4, wherein performing logged radio measurement further comprises:
   - obtaining radio measurements according to the logged radio measurement report configuration;
   - storing at least part of the radio measurements in layer 1 over time;
   - generating, at layer 1, at least a part of the logged radio measurement report based on the at least part of the radio measurement stored in layer 1; and
   - providing the generated at least a part of the logged radio measurement report from layer 1 to layer 3 for transmission.
6. The method of clause 4 or clause 5, wherein the time for storing the radio measurements is defined as periodicity and offset in slots for reporting over physical uplink control channel, a timing offset for reporting over physical uplink shared channel, and/or a layer 3 timer for reporting over dedicated control channel.
7. The method of any one of clauses 2 to 6, wherein the logged radio measurement report is at least in part transmitted as layer 1 physical layer uplink control information.
8. The method of any one of clauses 2 to 7, wherein the one or more logged radio measurement reporting conditions define an opportunity when the logged radio measurement report is to be transmitted and an uplink resource for transmission of the logged radio measurement report, wherein the opportunity comprises at least one of a periodical condition and an event-based condition.
9. The method of clause 8, wherein the uplink resource comprises a periodic resource, an aperiodic resource, or a semipersistent resource.
10. The method of any one of clauses 1 to 9 further comprising:
   - receiving, from the network node, a logged radio measurement report deactivation command; and
   - in response to receiving the logged radio measurement report deactivation command, deactivating the logged radio measurements.
11. The method of any one of clauses 1 to 10, wherein the indication to activate logged radio measurements is the logged radio measurement report configuration and/or a logged radio measurement report configuration activation command.
12. The method of clause 10 or clause 11, wherein the logged radio measurement report deactivation command and/or the logged radio measurement report configuration activation command is a media access control, MAC, control element.
13. The method of any one of clauses 1 to 12, wherein the indication to activate logged radio measurements indicates an immediate radio measurement report deactivation command indicating a deactivation of immediate radio measurements and reporting thereof.
14. The method of any one of clauses 1 to 12, wherein a deactivation of immediate radio measurements is indicated by a MAC control element indicating an immediate radio measurement report deactivation command.
15. The method of clause 13 or clause 14, further comprising:
   - transitioning from immediate radio measurements to logged radio measurements in response to receiving the immediate radio measurement report deactivation command.
16. The method of any one of clauses 1 to 15, wherein the logged radio measurement report configuration is received in a layer 3 radio resource control message.
17. The method of clause 16 further comprising:
   - providing the logged radio measurement report configuration from layer 3 to layer 1; and
   - storing the logged radio measurement report configuration in layer 1.
18. The method of any one of clauses 1 to 17, wherein the one or more logged radio measurement conditions comprise at least one of a logged radio measurement trigger defining when to log radio measurements, a report quantity defining a content of the logged radio measurements, and a logged radio measurement termination condition indicating when to stop logging of radio measurements.
19. The method of clause 18, wherein the logged radio measurement trigger comprises a periodic, an aperiodic, or a semipersistent logging trigger.
20. The method of clause 18 or clause 19, wherein the logging termination condition comprises at least one of a maximum payload size for the logged data report, a maximum memory size to be used for the logged radio measurements, or maximum time for logging the measurements.
21. The method of any one of clauses 1 to 20 further comprising:
   - receiving, from the network node, an immediate radio measurement report configuration indicating one or more immediate reporting conditions; and
   - performing immediate radio measurements according to the immediate radio measurement report configuration; and
   - in response to determining that the one or more immediate reporting conditions are met, transmitting an immediate radio measurement report comprising the immediate radio measurements to the network node.
22. The method of clause 21 further comprising:
   - receiving, from the network node, an immediate radio measurement report configuration activation command; and
   - in response to receiving the immediate radio measurement report configuration activation command, activating the immediate radio measurement report configuration for starting performing immediate radio measurements and transmitting immediate radio measurement reports.
23. The method of clause 21 or clause 22, wherein the logged radio measurements as configured with the logged radio measurement report configuration are to be performed more frequently in time, reported less frequently in time, and/or reported after a greater period in time than the immediate radio measurements, wherein the logged radio measurement reports are configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.
24. The method of any one of clauses 21 to 23, wherein the logged radio measurement reports include at least one additional report quantity compared to the immediate radio measurement reports configured for the user equipment.
25. The method of any one of clauses 21 to 24, wherein the immediate measurement report configuration and the logged radio measurement report configuration are received within one message.
26. The method of any one of clauses 21 to 25, wherein the logged radio measurement configuration and/or the immediate measurement report configuration are included in a channel status information report configuration information element, CSI-ReportConfig IE.
27. The method of any one of clauses 21 to 26, wherein transmission of immediate radio measurement reports is prioritized over transmission of logged radio measurement reports.
28. The method of any one of clauses 1 to 27, wherein a content of the logged radio measurements comprises at least one of channel status measurements and beam measurements.
29. The method of clause 28, wherein the channel status measurements comprise one or more of channel quality information, a precoding matrix indicator, a channel state information resource indicator, a synchronization signal block, a layer indicator, a rank indicator, and a level 1 reference signal received power.
30. The method of clause 28 or clause 29, wherein the beam measurements comprise beam predictions.
31. Method, performed by a network node, of acquiring radio measurements from a user equipment in radio resource control connected state comprising:
   - determining that data collection of logged radio measurements is to be initiated with the user equipment;
   - transmitting, to the user equipment, a logged radio measurement report configuration indicating one or more logged radio measurement conditions; and
   - indicating, to the user equipment, to activate logged radio measurements for performing logged radio measurements over time according to the one or more logged radio measurement conditions.
32. The method of clause 31, wherein the logged radio measurement report configuration further indicates one or more logged radio measurement reporting conditions, the method further comprising:
   - receiving a logged radio measurement report comprising logged radio measurements from the user equipment according to the one or more logged radio measurement reporting conditions.
33. The method of clause 32, wherein the time for performing logged measurements is defined as periodicity and offset in slots for reporting over physical uplink control channel, a timing offset for reporting over physical uplink shared channel, and/or a layer 3 timer for reporting over dedicated control channel.
34. The method of clause 32 or clause 33, wherein the logged radio measurement report is at least in part received in a layer 3 radio resource control message and/or at least in part transmitted as layer 1 physical layer uplink control information.
35. The method of any one of clauses 32 to 34, wherein the one or more logged radio measurement reporting conditions define an opportunity when the logged radio measurement report is to be transmitted and an uplink resource for transmission of the logged radio measurement report, wherein the opportunity comprises at least one of a periodical condition and an event-based condition.
36. The method of clause 35, wherein the uplink resource comprises a periodic resource, an aperiodic resource, or a semipersistent resource.
37. The method of any one of clauses 31 to 36 further comprising:
   - transmitting, to the user equipment, a logged radio measurement report deactivation command for deactivating the logged radio measurements.
38. The method of any one of clauses 31 to 37, wherein the indication to activate logged radio measurements is the logged radio measurement report configuration and/or a logged radio measurement report configuration activation command.
39. The method of clause 37 or clause 38, wherein the logged radio measurement report configuration activation command and/or the logged radio measurement report deactivation command is a media access control, MAC, control element.
40. The method of any one of clauses 31 to 39, wherein the indication to activate logged radio measurements indicates an immediate radio measurement report deactivation command indicating a deactivation of immediate radio measurements and reporting thereof.
41. The method of any one of clauses 31 to 39, wherein a deactivation of immediate radio measurements is indicated by a media access control, MAC, control element indicating an immediate radio measurement report deactivation command.
42. The method of any one of clauses 31 to 41, wherein the logged radio measurement report configuration is received in a layer 3 radio resource control message.
43. The method of any one of clauses 31 to 42, wherein the one or more logged radio measurement conditions comprise at least one of a logged radio measurement trigger defining when to log radio measurements, a report quantity defining a content of the logged radio measurements, and a logged radio measurement termination condition indicating when to stop logging of radio measurements.
44. The method of clause 43, wherein the logged radio measurement trigger comprises a periodic, an aperiodic, or a semipersistent logging trigger.
45. The method of clause 43 or clause 44, wherein the logging termination condition comprises at least one of a maximum payload size for the logged data report, a maximum memory size to be used for the logged radio measurements, or maximum time for logging the measurements.
46. The method of any one of clauses 31 to 45 further comprising:
   - transmitting, to the user equipment, an immediate radio measurement report configuration indicating one or more immediate reporting conditions for performing immediate radio measurements; and
   - receiving, from the user equipment, an immediate radio measurement report comprising the immediate radio measurements according to the immediate radio measurement report configuration.
47. The method of clause 46 further comprising:
   - transmitting, to the user equipment, an immediate radio measurement report configuration activation command for activating the immediate radio measurement report configuration for starting performing immediate radio measurements and transmitting immediate radio measurement reports.
48. The method of clause 46 or clause 47, wherein the logged radio measurements as configured with the logged radio measurement report configuration are to be performed more frequently in time, reported less frequently in time, and/or reported after a greater period in time than the immediate radio measurements, wherein the logged radio measurement reports are configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.
49. The method of any one of clauses 46 to 48, wherein the logged radio measurement reports include at least one additional report quantity compared to the immediate radio measurement reports configured for the user equipment.
50. The method of any one of clauses 46 to 49, wherein the immediate measurement report configuration and the logged radio measurement report configuration are received within one message.
51. The method of any one of clauses 46 to 50, wherein the logged radio measurement configuration and/or the immediate measurement report configuration are included in a channel status information report configuration information element, CSI-ReportConfig IE.
52. The method of any one of clauses 46 to 51, wherein the network node comprises a centralized and distributed unit, the method further comprising:
   - receiving, from the user equipment, the logged radio measurement report and the immediate radio measurement report at the distributed unit;
   - combining, at the distributed unit, a content of the logged radio measurement report and a content of the immediate radio measurement report in a combined radio measurement report; and
   - transmitting, from the distributed unit, the combined radio measurement report to the centralized unit.
53. The method of any one of clauses 31 to 51, wherein a content of the logged radio measurements comprises at least one of channel status measurements and beam measurements.
54. The method of clause 52, wherein the channel status measurements comprise one or more of channel quality information, a precoding matrix indicator, a channel state information resource indicator, a synchronization signal block, a layer indicator, a rank indicator, and a level 1 reference signal received power, and/or wherein the beam measurements comprise beam predictions.
55. Apparatus of a user equipment in radio resource control connected state configured to:
   - receive, from a network node, a logged radio measurement report configuration indicating one or more logged radio measurement conditions; and
   - in response to an indication to activate logged radio measurements, perform logged radio measurements according to the one or more logged radio measurement conditions.
56. The apparatus of clause 55, wherein the logged radio measurement report configuration further indicates one or more logged radio measurement reporting conditions, the apparatus further being configured to:
   - in response to determining that at least one of the one or more logged radio measurement reporting conditions is met, transmit a logged radio measurement report comprising the logged radio measurements to the network node.
57. The apparatus of clause 56, wherein the logged radio measurement report is at least in part transmitted in a layer 3 radio resource control message.
58. The apparatus of clause 57, wherein the apparatus is for performing logged radio measurement configured to:
   - obtain radio measurements according to the logged radio measurement report configuration;
   - provide at least a part of the radio measurements from layer 1 to layer 3 for storing over time; and
   - generate, at layer 3, at least a part of the logged radio measurement report based on the at least a part of the radio measurements stored in layer 3 for transmission.
59. The apparatus of clause 57 or clause 58, wherein the apparatus is further for performing logged radio measurement configured to:
   - obtain radio measurements according to the logged radio measurement report configuration;
   - store at least part of the radio measurements in layer 1 over time;
   - generate, at layer 1, at least a part of the logged radio measurement report based on the at least part of the radio measurement stored in layer 1; and
   - provide the generated at least a part of the logged radio measurement report from layer 1 to layer 3 for transmission.
60. The apparatus of clause 58 or clause 59, wherein the time for storing the radio measurements is defined as periodicity and offset in slots for reporting over physical uplink control channel, a timing offset for reporting over physical uplink shared channel, and/or a layer 3 timer for reporting over dedicated control channel.
61. The apparatus of any one of clauses 56 to 60, wherein the logged radio measurement report is at least in part transmitted as layer 1 physical layer uplink control information.
62. The apparatus of any one of clauses 56 to 61, wherein the one or more logged radio measurement reporting conditions define an opportunity when the logged radio measurement report is to be transmitted and an uplink resource for transmission of the logged radio measurement report, wherein the opportunity comprises at least one of a periodical condition and an event-based condition.
63. The apparatus of clause 62, wherein the uplink resource comprises a periodic resource, an aperiodic resource, or a semipersistent resource.
64. The apparatus of any one of clauses 55 to 63 further being configured to:
   - receive, from the network node, a logged radio measurement report deactivation command; and
   - in response to receiving the logged radio measurement report deactivation command, deactivating the logged radio measurements.
65. The apparatus of any one of clauses 55 to 64, wherein the indication to activate logged radio measurements is the logged radio measurement report configuration and/or a logged radio measurement report configuration activation command.
66. The apparatus of clause 64 or clause 65, wherein the logged radio measurement report deactivation command and/or the logged radio measurement report configuration activation command is a media access control, MAC, control element.
67. The apparatus of any one of clauses 55 to 66, wherein the indication to activate logged radio measurements indicates an immediate radio measurement report deactivation command indicating a deactivation of immediate radio measurements and reporting thereof.
68. The apparatus of any one of clauses 55 to 67, wherein a deactivation of immediate radio measurements is indicated by a MAC control element indicating an immediate radio measurement report deactivation command.
69. The apparatus of clause 67 or clause 68, further being configured to:
   - transition from immediate radio measurements to logged radio measurements in response to receiving the immediate radio measurement report deactivation command.
70. The apparatus of any one of clauses 55 to 69, wherein the logged radio measurement report configuration is received in a layer 3 radio resource control message.
71. The apparatus of clause 70 further being configured to:
   - provide the logged radio measurement report configuration from layer 3 to layer 1; and
   - store the logged radio measurement report configuration in layer 1.
72. The apparatus of any one of clauses 55 to 71, wherein the one or more logged radio measurement conditions comprise at least one of a logged radio measurement trigger defining when to log radio measurements, a report quantity defining a content of the logged radio measurements, and a logged radio measurement termination condition indicating when to stop logging of radio measurements.
73. The apparatus of clause 72, wherein the logged radio measurement trigger comprises a periodic, an aperiodic, or a semipersistent logging trigger.
74. The apparatus of clause 72 or clause 73, wherein the logging termination condition comprises at least one of a maximum payload size for the logged data report, a maximum memory size to be used for the logged radio measurements, or maximum time for logging the measurements.
75. The apparatus of any one of clauses 55 to 74 further being configured to:
   - receive, from the network node, an immediate radio measurement report configuration indicating one or more immediate reporting conditions; and
   - perform immediate radio measurements according to the immediate radio measurement report configuration; and
   - in response to determining that the one or more immediate reporting conditions are met, transmit an immediate radio measurement report comprising the immediate radio measurements to the network node.
76. The apparatus of clause 75 further being configured to:
   - receive, from the network node, an immediate radio measurement report configuration activation command; and
   - in response to receiving the immediate radio measurement report configuration activation command, activate the immediate radio measurement report configuration for starting performing immediate radio measurements and transmitting immediate radio measurement reports.
77. The apparatus of clause 75 or clause 76, wherein the logged radio measurements as configured with the logged radio measurement report configuration are to be performed more frequently in time, reported less frequently in time, and/or reported after a greater period in time than the immediate radio measurements, wherein the logged radio measurement reports are configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.
78. The apparatus of any one of clauses 75 to 77, wherein the logged radio measurement reports include at least one additional report quantity compared to the immediate radio measurement reports configured for the user equipment.
79. The apparatus of any one of clauses 75 to 78, wherein the immediate measurement report configuration and the logged radio measurement report configuration are received within one message.
80. The apparatus of any one of clauses 75 to 79, wherein the logged radio measurement configuration and/or the immediate measurement report configuration are included in a channel status information report configuration information element, CSI-ReportConfig IE.
81. The apparatus of any one of clauses 75 to 80, wherein transmission of immediate radio measurement reports is prioritized over transmission of logged radio measurement reports.
82. The apparatus of any one of clauses 55 to 81, wherein a content of the logged radio measurements comprises at least one of channel status measurements and beam measurements.
83. The apparatus of clause 82, wherein the channel status measurements comprise one or more of channel quality information, a precoding matrix indicator, a channel state information resource indicator, a synchronization signal block, a layer indicator, a rank indicator, and a level 1 reference signal received power.
84. The apparatus of clause 82 or clause 83, wherein the beam measurements comprise beam predictions.
85. Apparatus of a network node configured to:
   - determine that data collection of logged radio measurements is to be initiated with the user equipment with a user equipment in radio resource control connected state;
   - transmit, to the user equipment, a logged radio measurement report configuration indicating one or more logged radio measurement conditions; and
   - indicate, to the user equipment, to activate logged radio measurements for performing logged radio measurements over time according to the one or more logged radio measurement conditions.
86. The apparatus of clause 85, wherein the logged radio measurement report configuration further indicates one or more logged radio measurement reporting conditions, the apparatus further being configured to:
   - receive a logged radio measurement report comprising logged radio measurements from the user equipment according to the one or more logged radio measurement reporting conditions.
87. The apparatus of clause 86, wherein the time for performing logged radio measurements is defined as periodicity and offset in slots for reporting over physical uplink control channel, a timing offset for reporting over physical uplink shared channel, and/or a layer 3 timer for reporting over dedicated control channel.
88. The apparatus of clause 86 or clause 87, wherein the logged radio measurement report is at least in part received in a layer 3 radio resource control message and/or at least in part transmitted as layer 1 physical layer uplink control information.
89. The apparatus of any one of clauses 86 to 88, wherein the one or more logged radio measurement reporting conditions define an opportunity when the logged radio measurement report is to be transmitted and an uplink resource for transmission of the logged radio measurement report, wherein the opportunity comprises at least one of a periodical condition and an event-based condition.
90. The apparatus of clause 89, wherein the uplink resource comprises a periodic resource, an aperiodic resource, or a semipersistent resource.
91. The apparatus of any one of clauses 85 to 90 further being configured to:
   - transmit, to the user equipment, a logged radio measurement report deactivation command for deactivating the logged radio measurements.
92. The apparatus of any one of clauses 85 to 91, wherein the indication to activate logged radio measurements is the logged radio measurement report configuration and/or a logged radio measurement report configuration activation command.
93. The method of clause 91 or clause 92, wherein the logged radio measurement report configuration activation command and/or the logged radio measurement report deactivation command is a media access control, MAC, control element.
94. The apparatus of any one of clauses 85 to 93, wherein the indication to activate logged radio measurements indicates an immediate radio measurement report deactivation command indicating a deactivation of immediate radio measurements and reporting thereof.
95. The apparatus of any one of clauses 85 to 93, wherein a deactivation of immediate radio measurements is indicated by a dedicated message indicating an immediate radio measurement report deactivation command.
96. The apparatus of any one of clauses 85 to 95, wherein the logged radio measurement report configuration is received in a layer 3 radio resource control message.
97. The apparatus of any one of clauses 85 to 96, wherein the one or more logged radio measurement conditions comprise at least one of a logged radio measurement trigger defining when to log radio measurements, a report quantity defining a content of the logged radio measurements, and a logged radio measurement termination condition indicating when to stop logging of radio measurements.
98. The apparatus of clause 97, wherein the logged radio measurement trigger comprises a periodic, an aperiodic, or a semipersistent logging trigger.
99. The apparatus of clause 97 or clause 98, wherein the logging termination condition comprises at least one of a maximum payload size for the logged data report, a maximum memory size to be used for the logged radio measurements, or maximum time for logging the measurements.
100. The apparatus of any one of clauses 85 to 99 further being configured to:
   - transmit, to the user equipment, an immediate radio measurement report configuration indicating one or more immediate reporting conditions for performing immediate radio measurements; and
   - receive, from the user equipment, an immediate radio measurement report comprising the immediate radio measurements according to the immediate radio measurement report configuration.
101. The apparatus of clause 100 further being configured to:
   - transmit, to the user equipment, an immediate radio measurement report configuration activation command for activating the immediate radio measurement report configuration for starting performing radio measurements and transmitting immediate radio measurement reports.
102. The apparatus of clause 100 or clause 101, wherein the logged radio measurements as configured with the logged radio measurement report configuration are to be performed more frequently in time, reported less frequently in time, and/or reported after a greater period in time than the immediate radio measurements, wherein the logged radio measurement reports are configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.
103. The apparatus of any one of clauses 100 to 102, wherein the logged radio measurement reports include at least one additional report quantity compared to the immediate radio measurement reports configured for the user equipment.
104. The apparatus of any one of clauses 100 to 103, wherein the immediate measurement report configuration and the logged radio measurement report configuration are received within one message.
105. The apparatus of any one of clauses 100 to 104, wherein the logged radio measurement configuration and/or the immediate measurement report configuration are included in a channel status information report configuration information element, CSI-ReportConfig IE.
106. The apparatus of any one of clauses 100 to 105, wherein the network node comprises a centralized and distributed unit, the apparatus being further configured to:
   - receive, from the user equipment, the logged radio measurement report and the immediate radio measurement report at the distributed unit,
   - combine, at the distributed unit, a content of the logged radio measurement report and a content of the immediate radio measurement report in a combined radio measurement report; and
   - transmit, from the distributed unit, the combined radio measurement report to the centralized unit.
107. The apparatus of any one of clauses 85 to 106, wherein a content of the logged radio measurements comprises at least one of channel status measurements and beam measurements.
108. The apparatus of clause 107, wherein the channel status measurements comprise one or more of channel quality information, a precoding matrix indicator, a channel state information resource indicator, a synchronization signal block, a layer indicator, a rank indicator, and a level 1 reference signal received power and/or wherein the beam measurements comprise beam predictions.

### Second set of clauses:

1. Method of radio measurements performed by a user equipment, the method comprising:
   - receiving, from a network node, a radio measurement report configuration comprising a logged radio measurement report configuration;
   - in response to determining an immediate radio measurement report deactivation command, deactivating transmission of immediate radio measurement reports; and
   - performing logged radio measurements over time according to the logged radio measurement report configuration.
2. The method of clause 1 further comprising:
   - transmitting a logged radio measurement report comprising the logged radio measurements to the network node according to the logged radio measurement report configuration.
3. The method of clause 2, wherein the logged radio measurement report is at least in part transmitted in a layer 3 radio resource control message.
4. The method of clause 3 wherein performing logged radio measurement comprises:
   - obtaining radio measurements according to the logged radio measurement report configuration;
   - providing at least a part of the radio measurements from layer 1 to layer 3 for storing over time; and
   - generating, at layer 3, at least a part of the logged radio measurement report based on the at least a part of the radio measurements stored in layer 3 for transmission.
5. The method of clause 3 or clause 4, wherein performing logged radio measurement further comprises:
   - obtaining radio measurements according to the logged radio measurement report configuration;
   - storing at least part of the radio measurements in layer 1 over time;
   - generating, at layer 1, at least a part of the logged radio measurement report based on the at least part of the radio measurement stored in layer 1; and
   - providing the generated at least a part of the logged radio measurement report from layer 1 to layer 3 for transmission
6. The method of clause 4 or clause 5, wherein the time for storing the radio measurements is defined as periodicity and offset in slots for reporting over physical uplink control channel, a timing offset for reporting over physical uplink shared channel, and/or a layer 3 timer for reporting over dedicated control channel
7. The method of any one of clauses 2 to 6, wherein the logged radio measurement report is at least in part transmitted as layer 1 physical layer uplink control information.
8. The method of any one of clauses 1 to 7 further comprising:
   - receiving, from the network node, a logged radio measurement report configuration activation command; and
   - in response to receiving the logged radio measurement report configuration activation command, activating the logged radio measurement report configuration for starting performing logged radio measurements.
9. The method of clause 8, wherein the logged radio measurement report configuration activation command is a media access control, MAC, control element.
10. The method of any one of clauses 1 to 9, wherein the radio measurement report configuration further comprises an immediate radio measurement report configuration for providing the immediate radio measurement reports to the network, wherein the immediate radio measurement reports comprise information about immediate radio measurements.
11. The method of any one of clauses 1 to 10, wherein the deactivation command is indicated by the logged radio measurement report configuration, the logged radio measurement report configuration activation command, or a separate media access control, MAC, control element received from the network.
12. The method of any one of clauses 1 to 11, wherein the logged radio measurement report configuration comprises one or more logged radio measurement conditions and/or one or more logged radio measurement reporting conditions.
13. The method of clause 12, wherein the one or more logged radio measurement conditions comprise at least one of a logged radio measurement trigger defining when to log radio measurements, a report quantity defining a content of the logged radio measurements, and a logged radio measurement termination condition indicating when to stop logging of radio measurements.
14. The method of clause 13, wherein the logged radio measurement trigger comprises a periodic, an aperiodic, or a semipersistent logging trigger.
15. The method of clause 13 or clause 14, wherein the logging termination condition comprises at least one of a maximum payload size for the logged radio measurement report, a maximum memory size to be used for the logged radio measurements, or maximum time for logging the radio measurements.
16. The method of any one of clauses 12 to 15, wherein the one or more logged radio measurement reporting conditions define an opportunity when the logged radio measurement report is to be transmitted and an uplink resource for transmission of the logged radio measurement report, wherein the opportunity comprises at least one of a periodical condition and an event-based condition.
17. The method of clause 16, wherein the uplink resource comprises a periodic resource, an aperiodic resource, or a semipersistent resource.
18. The method of any one of clauses 1 to 17, wherein the transmission of immediate radio measurement reports is deactivated with respect to all or part of configured report quantities.
19. The method of any one of clauses 1 to 18, wherein the logged radio measurement report configuration is received in a layer 3 radio resource control message.
20. The method of clause 19 further comprising:
   - providing the logged radio measurement report configuration from layer 3 to layer 1; and
   - storing the logged radio measurement report configuration in layer 1.
21. The method of any one of clauses 1 to 20, wherein the radio measurement report configuration is included in a channel status information report configuration information element, CSI-ReportConfig IE.
22. The method of any one of clauses 1 to 21, wherein the logged radio measurements as configured with the logged radio measurement report configuration are to be performed more frequently in time, reported less frequently in time, and/or reported after a greater period in time than the immediate radio measurements, wherein the logged radio measurement reports are configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.
23. The method of any one of clauses 1 to 22, wherein the logged radio measurement reports include at least one additional report quantity compared to immediate radio measurement reports configured for the user equipment.
24. The method of any one of clauses 1 to 23, wherein transmission of not-deactivated immediate radio measurement reports is prioritized over transmission of logged radio measurement reports.
25. The method of any one of clauses 1 to 24, wherein a content of the logged radio measurements comprises at least one of channel status radio measurements and beam radio measurements.
26. The method of clause 25, wherein the channel status radio measurements comprise one or more of channel quality information, a precoding matrix indicator, a channel state information resource indicator, a synchronization signal block, a layer indicator, a rank indicator, and a level 1 reference signal received power.
27. The method of clause 25 or clause 26, wherein the beam radio measurements comprise beam predictions.
28. The method of any one of clauses 1 to 27, wherein the user equipment is in radio resource control connected state.
29. Method of acquiring radio measurements from a user equipment performed by a network node comprising:
   - determining that data collection of logged radio measurements is to be initiated with the user equipment;
   - transmitting, to the user equipment, a radio measurement report configuration comprising a logged radio measurement report configuration; and
   - indicating, to the user equipment, to deactivate transmission of immediate radio measurement reports with an immediate radio measurement report deactivation command.
30. The method of clause 29 further comprising:
   - receiving a logged radio measurement report comprising logged radio measurements from the user equipment according to the logged radio measurement report configuration.
31. The method of clause 30, wherein a time for performing logged radio measurements is defined as periodicity and offset in slots for reporting over physical uplink control channel, a timing offset for reporting over physical uplink shared channel, and/or a layer 3 timer for reporting over dedicated control channel.
32. The method of clause 30 or clause 31, wherein the logged radio measurement report is transmitted at least in part in a layer 3 radio resource control message and/or at least in part as layer 1 physical layer uplink control information.
33. The method of any one of clauses 29 to 32, wherein the logged radio measurement report configuration is transmitted in a layer 3 radio resource control message.
34. The method of any one of clauses 29 to 33 further comprising:
   - transmitting, to the user equipment, a logged radio measurement report configuration activation command for activating the logged radio measurement report configuration at the user equipment.
35. The method of clause 34, wherein the logged radio measurement report configuration activation command is a media access control, MAC, control element.
36. The method of any one of clauses 29 to 35, wherein the radio measurement report configuration further comprises an immediate radio measurement report configuration for receiving the immediate radio measurement reports from the user equipment, wherein the immediate radio measurement reports comprise information about immediate radio measurements.
37. The method of any one of clauses 29 to 36, wherein the deactivation command is indicated by the logged radio measurement report configuration, the logged radio measurement report configuration activation command, or separate media access control, MAC, control element.
38. The method of any one of clauses 29 to 37, wherein the logged radio measurement report configuration comprises one or more logged radio measurement conditions and/or one or more logged radio measurement reporting conditions.
39. The method of any one of clauses 38, wherein the one or more logged radio measurement conditions comprise at least one of a logged radio measurement trigger defining when to log radio measurements, a report quantity defining a content of the logged radio measurements, and a logged radio measurement termination condition indicating when to stop logging of radio measurements.
40. The method of clause 39, wherein the logged radio measurement trigger comprises a periodic, an aperiodic, or a semipersistent logging trigger.
41. The method of clause 39 or clause 40, wherein the logging termination condition comprises at least one of a maximum payload size for the logged radio measurement report, a maximum memory size to be used for the logged radio measurements, or maximum time for logging the radio measurements.
42. The method of any one of clauses 39 to 41, wherein the one or more logged radio measurement reporting conditions define an opportunity when the logged radio measurement report is to be transmitted and an uplink resource for transmission of the logged radio measurement report, wherein the opportunity comprises at least one of a periodical condition and an event-based condition.
43. The method of clause 42, wherein the uplink resource comprises a periodic resource, an aperiodic resource, or a semipersistent resource.
44. The method of any one of clauses 29 to 43, wherein the transmission of immediate radio measurement reports is deactivated with respect to all or part of configured report quantities.
45. The method of any one of clauses 29 to 44, wherein the radio measurement report configuration is included in a channel status information report configuration information element, CSI-ReportConfig IE.
46. The method of any one of clauses 29 to 45, wherein the logged radio measurements as configured with the logged radio measurement report configuration are to be performed more frequently in time, reported less frequently in time, and/or reported after a greater period in time than the immediate radio measurements, wherein the logged radio measurement reports are configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.
47. The method of any one of clauses 29 to 46, wherein the logged radio measurement reports include at least one additional report quantity compared to immediate radio measurement reports configured for the user equipment.
48. The method of any one of clauses 29 to 47, wherein a content of the logged radio measurements comprises at least one of channel status radio measurements and beam radio measurements.
49. The method of clause 48, wherein the channel status radio measurements comprise one or more of channel quality information, a precoding matrix indicator, a channel state information resource indicator, a synchronization signal block, a layer indicator, a rank indicator, and a level 1 reference signal received power and/or wherein the beam radio measurements comprise beam predictions.
50. The method of any one of clauses 29 to 49, wherein the network node comprises a centralized and distributed unit, the method further comprising:
   - receiving, from the user equipment, the logged radio measurement report and the immediate radio measurement report at the distributed unit;
   - combining, at the distributed unit, a content of the logged radio measurement report and a content of the immediate radio measurement report in a combined radio measurement report; and
   - transmitting, from the distributed unit, the combined radio measurement report to the centralized unit.
51. The method of any one of clauses 29 to 50, wherein the user equipment is in radio resource control connected state.
52. The method of any one of clauses 29 to 51, wherein data collection of logged radio measurements is initiated for artificial intelligence and/or machine learning functionality in the network node.
53. Apparatus of a user equipment being configured to execute the method of any one of clauses 1 to 28.
54. Apparatus of a network node being configured to execute the method of any one of clauses 29 to 52.
55. System of mobile communication between a user equipment and a network node, wherein the user equipment is configured to execute the method of any one of clauses 1 to 28 and the network node is configured to execute the method of any one of clauses 29 to 52.

### Third set of clauses:

1. Method of radio measurements performed by a user equipment in radio resource control connected state, the method comprising:
   - receiving, from the network node, a logged radio measurement report configuration indicating one or more logged radio measurement conditions; and
   - performing logged radio measurements over time according to the one or more logged radio measurement conditions.
2. The method of clause 1, wherein the logged radio measurement report configuration further indicates one or more logged radio measurement reporting conditions, the method further comprising:
   - in response to determining that at least one of the one or more logged radio measurement reporting conditions is met, transmitting a logged radio measurement report comprising the logged radio measurements to the network node.
3. The method of clause 2, wherein the time for performing radio measurements is defined as periodicity and offset in slots for reporting over physical uplink control channel, a timing offset for reporting over physical uplink shared channel, and/or a layer 3 timer for reporting over dedicated control channel
4. The method of clause 1 further comprising:
   - receiving, from the network node, a logged radio measurement report configuration activation command; and
   - in response to receiving the logged radio measurement report configuration activation command, activating the logged radio measurement report configuration for starting performing logged radio measurements.
5. The method of clause 4, wherein the logged radio measurement report configuration activation command is a media access control, MAC, control element.
6. The method of clause 1, wherein the logged radio measurement report configuration is received in a layer 3 radio resource control message.
7. The method of clause 1 further comprising:
   - providing the logged radio measurement report configuration from layer 3 to layer 1; and
   - storing the logged radio measurement report configuration in layer 1.
8. The method of clause 2, wherein the logged radio measurement report is transmitted at least in part in a layer 3 radio resource control message and/or at least in part as layer 1 physical layer uplink control information.
9. The method of clause 8, wherein performing logged radio measurement comprises:
   - obtaining radio measurements according to the logged radio measurement report configuration;
   - providing at least a part of the radio measurements from layer 1 to layer 3 for storing over time; and
   - generating, at layer 3, at least a part of the logged radio measurement report based on the at least a part of the radio measurements stored in layer 3 for transmission.
10. The method of clause 8, wherein performing logged radio measurement further comprises:
   - obtaining radio measurements according to the logged radio measurement report configuration;
   - storing at least part of the radio measurements in layer 1 over time;
   - generating, at layer 1, at least a part of the logged radio measurement report based on the at least part of the radio measurement stored in layer 1; and
   - providing the generated at least a part of the logged radio measurement report from layer 1 to layer 3 for transmission.
11. The method of clause 1, wherein the one or more logged radio measurement conditions comprise at least one of a logged radio measurement trigger defining when to log radio measurements, a report quantity defining a content of the logged radio measurements, and a logged radio measurement termination condition indicating when to stop logging of radio measurements.
12. The method of clause 11, wherein the logged radio measurement trigger comprises a periodic, an aperiodic, or a semipersistent logging trigger.
13. The method of clause 11, wherein the logging termination condition comprises at least one of a maximum payload size for the logged radio measurement report, a maximum memory size to be used for the logged radio measurements, or maximum time for logging the measurements.
14. The method of clause 2, wherein the one or more logged radio measurement reporting conditions define an opportunity when the logged radio measurement report is to be transmitted and an uplink resource for transmission of the logged radio measurement report, wherein the opportunity comprises at least one of a periodical condition and an event-based condition.
15. The method of clause 14, wherein the uplink resource comprises a periodic resource, an aperiodic resource, or a semipersistent resource.
16. The method of clause 1 further comprising:
   - receiving, from the network node, a logged radio measurement report deactivation command; and
   - in response to receiving the logged radio measurement report deactivation command, deactivating logged radio measurements.
17. The method of clause 16, wherein the logged radio measurement report deactivation command is a media access control, MAC, control element.
18. The method of clause 1 further comprising:
   - receiving, from the network node, an immediate radio measurement report configuration indicating one or more immediate reporting conditions;
   - performing immediate radio measurements according to the immediate radio measurement report configuration; and
   - in response to determining that the one or more immediate reporting conditions are met, transmitting an immediate radio measurement report comprising the immediate radio measurements to the network node.
19. The method of clause 18 further comprising:
   - receiving, from the network node, an immediate radio measurement report configuration activation command; and
   - in response to receiving the immediate radio measurement report configuration activation command, activating the immediate radio measurement report configuration for starting performing immediate radio measurements and transmitting immediate radio measurement reports.
20. The method of clause 18 further comprising:
   - receiving, from the network node, an immediate radio measurement report deactivation command; and
   - in response to receiving the immediate radio measurement report deactivation command, deactivating immediate radio measurements.
21. The method of clause 18, wherein the immediate radio measurement report deactivation command is indicated by the logged radio measurement report configuration, the logged radio measurement report configuration activation command, or a media access control, MAC, control element received from the network node.
22. The method of clause 18, wherein the immediate measurement report configuration and the logged radio measurement report configuration are received within one message.
23. The method of clause 18, wherein the logged radio measurement configuration and/or the immediate measurement report configuration are included in a channel status information report configuration information element, CSI-ReportConfig IE.
24. The method of clause 18, wherein the logged radio measurements as configured with the logged radio measurement report configuration are to be performed more frequently in time, reported less frequently in time, and/or reported after a greater period in time than the immediate radio measurements, wherein the logged radio measurement reports are configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.
25. The method of clause 18, wherein the logged radio measurement reports include at least one additional report quantity compared to the immediate radio measurement reports configured for the user equipment.
26. The method of clause 18, wherein transmission of immediate radio measurement reports is prioritized over transmission of logged radio measurement reports.
27. The method of clause 1, wherein the logged radio measurement configuration is included in a channel status information report configuration information element, CSI-ReportConfig IE.
28. The method of clause 1, wherein a content of the logged radio measurements comprises at least one of channel status measurements and beam measurements.
29. The method of clause 28, wherein the channel status measurements comprise one or more of channel quality information, a precoding matrix indicator, a channel state information resource indicator, a synchronization signal block, a layer indicator, a rank indicator, and a level 1 reference signal received power.
30. The method of clause 28, wherein the beam measurements comprise beam predictions.
31. Method, performed by a network node, of acquiring radio measurements from a user equipment in radio resource control connected state comprising:
   - determining that data collection of logged radio measurements in radio resource control connected state is to be initiated; and
   - transmitting, to the user equipment, a logged radio measurement report configuration indicating one or more logged radio measurement conditions.
32. The method of clause 31, wherein the logged radio measurement report configuration further indicates one or more logged radio measurement reporting conditions, the method further comprising:
   - receiving a logged radio measurement report comprising logged radio measurements from the user equipment according to the one or more logged radio measurement reporting conditions.
33. The method of clause 32, wherein a time for performing logged measurements is defined as periodicity and offset in slots for reporting over physical uplink control channel, a timing offset for reporting over physical uplink shared channel, and/or a layer 3 timer for reporting over dedicated control channel.
34. The method of clause 31 further comprising:
   - transmitting, to the user equipment, a logged radio measurement report configuration activation command for activating, at the user equipment, the logged radio measurement report configuration.
35. The method of clause 34, wherein the logged radio measurement report configuration activation command is a media access control, MAC, control element.
36. The method of clause 31, wherein the logged radio measurement report configuration is transmitted in a layer 3 radio resource control message.
37. The method of clause 32, wherein the logged radio measurement report is received at least in part in a layer 3 radio resource control message and/or at least in part as layer 1 physical layer uplink control information.
38. The method of clause 31, wherein the one or more logged radio measurement conditions comprise at least one of a logged radio measurement trigger defining when to log radio measurements, a report quantity defining a content of the logged radio measurements, and a logged radio measurement termination condition indicating when to stop logging of radio measurements.
39. The method of clause 38, wherein the logged radio measurement trigger comprises a periodic, an aperiodic, or a semipersistent logging trigger.
40. The method of clause 38, wherein the logging termination condition comprises at least one of a maximum payload size for the logged radio measurement report, a maximum memory size to be used for the logged radio measurements, or maximum time for logging the measurements.
41. The method of clause 32, wherein the one or more logged radio measurement reporting conditions define an opportunity when the logged radio measurement report is to be transmitted and an uplink resource for transmission of the logged radio measurement report, wherein the opportunity comprises at least one of a periodical condition and an event-based condition.
42. The method of clause 41, wherein the uplink resource comprises a periodic resource, an aperiodic resource, or a semipersistent resource.
43. The method of clause 31 further comprising:
   - transmitting, to the user equipment, a logged radio measurement report deactivation command for deactivating logged radio measurements.
44. The method of clause 43, wherein the logged radio measurement report deactivation command is a media access control, MAC, control element.
45. The method of clause 31 further comprising:
   - transmitting, to the user equipment, an immediate radio measurement report configuration indicating one or more immediate reporting conditions; and
   - receiving, from the user equipment, an immediate radio measurement report comprising immediate radio measurements.
46. The method of clause 45 further comprising:
   - transmitting, to the user equipment, an immediate radio measurement report configuration activation command for activating, at the user equipment, the immediate radio measurement report configuration.
47. The method of clause 45 further comprising:
   - transmitting, to the user equipment, an immediate radio measurement report deactivation command for deactivating, at the user equipment, immediate radio measurements.
48. The method of clause 47, wherein the immediate radio measurement report deactivation command is indicated by the logged radio measurement report configuration, the logged radio measurement report configuration activation command, or a media access control, MAC, control element.
49. The method of clause 45, wherein the immediate measurement report configuration and the logged radio measurement report configuration are received within one message.
50. The method of clause 45, wherein the logged radio measurement configuration and/or the immediate measurement report configuration are included in a channel status information report configuration information element, CSI-ReportConfig IE.
51. The method of clause 45, wherein the logged radio measurements as configured with the logged radio measurement report configuration are to be performed more frequently in time, reported less frequently in time, and/or reported after a greater period in time than the immediate radio measurements, wherein the logged radio measurement reports are configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.
52. The method of clause 45, wherein transmission of immediate radio measurement reports is prioritized over transmission of logged radio measurement reports.
53. The method of any one of clause 45, wherein the network node comprises a centralized and distributed unit, the method further comprising:
   - receiving, from the user equipment, the logged radio measurement report and the immediate radio measurement report at the distributed unit;
   - combining, at the distributed unit, a content of the logged radio measurement report and a content of the immediate radio measurement report in a combined radio measurement report; and
   - transmitting, from the distributed unit, the combined radio measurement report to the centralized unit.
54. The method of clause 31, wherein the logged radio measurement configuration is included in a channel status information report configuration information element, CSI-ReportConfig IE.
55. The method of clause 31, wherein a content of the logged radio measurements comprises at least one of channel status measurements and beam measurements.
56. The method of clause 54, wherein the channel status measurements comprise one or more of channel quality information, a precoding matrix indicator, a channel state information resource indicator, a synchronization signal block, a layer indicator, a rank indicator, and a level 1 reference signal received power and/or wherein the beam measurements comprise beam predictions.
57. Apparatus of a user equipment in radio resource control connected state, the apparatus being configured to:
   - receive, from a network node, a logged radio measurement report configuration indicating one or more logged radio measurement conditions; and
   - perform logged radio measurements over time according to the one or more logged radio measurement conditions.
58. The apparatus of clause 57, wherein the logged radio measurement report configuration further indicates one or more logged radio measurement reporting conditions, the apparatus further being configured to:
   - in response to determining that at least one of the one or more logged radio measurement reporting conditions is met, transmit a logged radio measurement report comprising logged radio measurements to the network node.
59. The apparatus of clause 58, wherein the time for performing logged radio measurements is defined as periodicity and offset in slots for reporting over physical uplink control channel, a timing offset for reporting over physical uplink shared channel, and/or a layer 3 timer for reporting over dedicated control channel.
60. The apparatus of clause 57 further being configured to:
   - receive, from the network node, a logged radio measurement report configuration activation command; and
   - in response to receiving the logged radio measurement report configuration activation command, activate the logged radio measurement report configuration for starting performing logged radio measurements.
61. The apparatus of clause 60, wherein the logged radio measurement report configuration activation command is a media access control, MAC, control element.
62. The apparatus of clause 57, wherein the logged radio measurement report configuration is received in a layer 3 radio resource control message.
63. The apparatus of clause 62 further being configured to:
   - provide the logged radio measurement report configuration from layer 3 to layer 1; and
   - store the logged radio measurement report configuration in layer 1.
64. The apparatus of clause 58, wherein the logged radio measurement report is transmitted at least in part in a layer 3 radio resource control message and/or at least in part as layer 1 physical layer uplink control information.
65. The apparatus of clause 64, wherein the apparatus is for performing logged radio measurement configured to:
   - obtain radio measurements according to the logged radio measurement report configuration;
   - provide at least a part of the radio measurements from layer 1 to layer 3 for storing over time; and
   - generate, at layer 3, at least a part of the logged radio measurement report based on the at least a part of the radio measurements stored in layer 3 for transmission.
66. The apparatus of clause 64, wherein the apparatus is for performing logged radio measurement further configured to:
   - obtain radio measurements according to the logged radio measurement report configuration;
   - store at least part of the radio measurements in layer 1 over time;
   - generate, at layer 1, at least a part of the logged radio measurement report based on the at least part of the radio measurement stored in layer 1; and
   - provide the generated at least a part of the logged radio measurement report from layer 1 to layer 3 for transmission.
67. The apparatus of clause 57, wherein the one or more logged radio measurement conditions comprise at least one of a logged radio measurement trigger defining when to log radio measurements, a report quantity defining a content of the logged radio measurements, and a logged radio measurement termination condition indicating when to stop logging of radio measurements.
68. The apparatus of clause 67, wherein the logged radio measurement trigger comprises a periodic, an aperiodic, or a semipersistent logging trigger.
69. The apparatus of clause 67, wherein the logging termination condition comprises at least one of a maximum payload size for the logged radio measurement report, a maximum memory size to be used for the logged radio measurements, or maximum time for logging the measurements.
70. The apparatus of clause 58, wherein the one or more logged radio measurement reporting conditions define an opportunity when the logged radio measurement report is to be transmitted and an uplink resource for transmission of the logged radio measurement report, wherein the opportunity comprises at least one of a periodical condition and an event-based condition.
71. The apparatus of clause 70, wherein the uplink resource comprises a periodic resource, an aperiodic resource, or a semipersistent resource.
72. The apparatus of clause 57 further being configured to:
   - receive, from the network node, a logged radio measurement report deactivation command; and
   - in response to receiving the logged radio measurement report deactivation command, deactivate logged radio measurements.
73. The apparatus of clause 72, wherein the logged radio measurement report deactivation command is a media access control, MAC, control element.
74. The apparatus of clause 57 further being configured to:
   - receive, from the network node, an immediate radio measurement report configuration indicating one or more immediate reporting conditions;
   - perform immediate radio measurements according to the immediate radio measurement report configuration; and
   - in response to determining that the one or more immediate reporting conditions are met, transmit an immediate radio measurement report being configured to the immediate radio measurements to the network node.
75. The apparatus of clause 74 further being configured to:
   - receive, from the network node, an immediate radio measurement report configuration activation command; and
   - in response to receiving the immediate radio measurement report configuration activation command, activating the immediate radio measurement report configuration for starting performing immediate radio measurements and transmitting immediate radio measurement reports.
76. The apparatus of clause 74 further being configured to:
   - receive, from the network node, an immediate radio measurement report deactivation command; and
   - in response to receiving the immediate radio measurement report deactivation command, deactivate immediate radio measurements.
77. The apparatus of clause 76, wherein the immediate radio measurement report deactivation command is indicated by the logged radio measurement report configuration, the logged radio measurement report configuration activation command, or a media access control, MAC, control element received from the network node.
78. The apparatus of clause 74, wherein the immediate measurement report configuration and the logged radio measurement report configuration are received within one message.
79. The apparatus of clause 74, wherein the logged radio measurement configuration and/or the immediate measurement report configuration are included in a channel status information report configuration information element, CSI-ReportConfig IE.
80. The apparatus of clause 74, wherein the logged radio measurements as configured with the logged radio measurement report configuration are to be performed more frequently in time, reported less frequently in time, and/or reported after a greater period in time than the immediate radio measurements, wherein the logged radio measurement reports are configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.
81. The apparatus of clause 74, wherein the logged radio measurement reports include at least one additional report quantity compared to the immediate radio measurement reports configured for the user equipment.
82. The apparatus of clause 74, wherein transmission of immediate radio measurement reports is prioritized over transmission of logged radio measurement reports.
83. The apparatus of clause 57, wherein the logged radio measurement configuration is included in a channel status information report configuration information element, CSI-ReportConfig IE.
84. The apparatus of clause 57, wherein a content of the logged radio measurements comprises at least one of channel status measurements and beam measurements.
85. The apparatus of clause 84, wherein the channel status measurements comprise one or more of channel quality information, a precoding matrix indicator, a channel state information resource indicator, a synchronization signal block, a layer indicator, a rank indicator, and a level 1 reference signal received power.
86. The apparatus of clause 84, wherein the beam measurements comprise beam predictions.
87. Apparatus of a network node configured to:
   - determine that data collection of logged radio measurements in radio resource control connected state is to be initiated with a user equipment in connected state; and
   - transmit, to the user equipment, a logged radio measurement report configuration indicating one or more logged radio measurement conditions.
88. The apparatus of clause 87, wherein the logged radio measurement report configuration further indicates one or more logged radio measurement reporting conditions, the apparatus further being configured to:
   - receive a logged radio measurement report comprising logged radio measurements from the user equipment according to the one or more logged radio measurement reporting conditions.
89. The apparatus of clause 88, wherein a time for performing logged radio measurements is defined as periodicity and offset in slots for reporting over physical uplink control channel, a timing offset for reporting over physical uplink shared channel, and/or a layer 3 timer for reporting over dedicated control channel
90. The apparatus of clause 87 further being configured to:
   - transmit, to the user equipment, a logged radio measurement report configuration activation command for activating, at the user equipment, the logged radio measurement report configuration.
91. The apparatus of clause 90, wherein the logged radio measurement report configuration activation command is a media access control, MAC, control element.
92. The apparatus of clause 87, wherein the logged radio measurement report configuration is transmitted in a layer 3 radio resource control message.
93. The apparatus of clause 88, wherein the logged radio measurement report is at least in part received in a layer 3 radio resource control message and/or least in part as layer 1 physical layer uplink control information.
94. The apparatus of clause 87, wherein the one or more logged radio measurement conditions comprise at least one of a logged radio measurement trigger defining when to log radio measurements, a report quantity defining a content of the logged radio measurements, and a logged radio measurement termination condition indicating when to stop logging of radio measurements.
95. The apparatus of clause 94, wherein the logged radio measurement trigger comprises a periodic, an aperiodic, or a semipersistent logging trigger.
96. The apparatus of clause 94, wherein the logging termination condition comprises at least one of a maximum payload size for the logged radio measurement report, a maximum memory size to be used for the logged radio measurements, or maximum time for logging the measurements.
97. The apparatus of clause 88, wherein the one or more logged radio measurement reporting conditions define an opportunity when the logged radio measurement report is to be transmitted and an uplink resource for transmission of the logged radio measurement report, wherein the opportunity comprises at least one of a periodical condition and an event-based condition.
98. The apparatus of clause 97, wherein the uplink resource comprises a periodic resource, an aperiodic resource, or a semipersistent resource.
99. The apparatus of clause 87 further being configured to:
   - transmit, to the user equipment, a logged radio measurement report deactivation command for deactivating logged radio measurements.
100. The apparatus of clause 99, wherein the logged radio measurement report deactivation command is a media access control, MAC, control element.
101. The apparatus of clause 87 further being configured to:
   - transmit, to the user equipment, an immediate radio measurement report configuration indicating one or more immediate reporting conditions; and
   - receiving, from the user equipment, an immediate radio measurement report being configured to immediate radio measurements.
102. The apparatus of clause 101 further being configured to:
   - transmit, to the user equipment, an immediate radio measurement report configuration activation command for activating, at the user equipment, the immediate radio measurement report configuration.
103. The apparatus of clause 101 further being configured to:
   - transmit, to the user equipment, an immediate radio measurement report deactivation command for deactivating, at the user equipment, immediate radio measurements.
104. The apparatus of clause 103, wherein the immediate radio measurement report deactivation command is indicated by the logged radio measurement report configuration, the logged radio measurement report configuration activation command, or a media access control, MAC, control element.
105. The apparatus of clause 101, wherein the immediate measurement report configuration and the logged radio measurement report configuration are received within one message.
106. The apparatus of clause 101, wherein the logged radio measurement configuration and/or the immediate measurement report configuration are included in a channel status information report configuration information element, CSI-ReportConfig IE.
107. The apparatus of clause 101, wherein the logged radio measurements as configured with the logged radio measurement report configuration are to be performed more frequently in time, reported less frequently in time, and/or reported after a greater period in time than the immediate radio measurements, wherein the logged radio measurement reports are configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.
108. The apparatus of clause 101, wherein transmission of immediate radio measurement reports is prioritized over transmission of logged radio measurement reports.
109. The method of clause 101, wherein the network node comprises a centralized and distributed unit, the apparatus further being configured to:
   - receive, from the user equipment, the logged radio measurement report and the immediate radio measurement report at the distributed unit;
   - combine, at the distributed unit, a content of the logged radio measurement report and a content of the immediate radio measurement report in a combined radio measurement report; and
   - transmit, from the distributed unit, the combined radio measurement report to the centralized unit.
110. The apparatus of clause 87, wherein the logged radio measurement configuration is included in a channel status information report configuration information element, CSI-ReportConfig IE.
111. The apparatus of clause 87, wherein a content of the logged radio measurements comprises at least one of channel status measurements and beam measurements.
112. The apparatus of clause 111, wherein the channel status measurements comprise one or more of channel quality information, a precoding matrix indicator, a channel state information resource indicator, a synchronization signal block, a layer indicator, a rank indicator, and a level 1 reference signal received power and/or wherein the beam measurements comprise beam predictions.

The foregoing description has provided by way of non-limiting examples a full and informative description of the exemplary embodiment of the subject disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of the subject disclosure as defined in the appended claims. Indeed, there is a further embodiment comprising a combination of one or more embodiments with any of the other embodiments previously discussed.

## Claims

1. Method of radio measurements performed by a user equipment, the method comprising:
- receiving, from a network node, a radio measurement report configuration comprising a logged radio measurement report configuration;
- in response to determining an immediate radio measurement report deactivation command, deactivating transmission of immediate radio measurement reports; and
- performing logged radio measurements over time according to the logged radio measurement report configuration.

2. The method of claim 1 further comprising:
- transmitting a logged radio measurement report comprising the logged radio measurements to the network node according to the logged radio measurement report configuration.

3. The method of claim 2, wherein the logged radio measurement report is at least in part transmitted in a layer 3 radio resource control message.

4. The method of claim 3 wherein performing logged radio measurement comprises:
- obtaining radio measurements according to the logged radio measurement report configuration;
- providing at least a part of the radio measurements from layer 1 to layer 3 for storing over time; and
- generating, at layer 3, at least a part of the logged radio measurement report based on the at least a part of the radio measurements stored in layer 3 for transmission.

5. The method of claim 3 or claim 4, wherein performing logged radio measurement further comprises:
- obtaining radio measurements according to the logged radio measurement report configuration;
- storing at least part of the radio measurements in layer 1 over time;
- generating, at layer 1, at least a part of the logged radio measurement report based on the at least part of the radio measurement stored in layer 1; and
- providing the generated at least a part of the logged radio measurement report from layer 1 to layer 3 for transmission.

6. The method of claim 4 or claim 5, wherein the time for storing the radio measurements is defined as periodicity and offset in slots for reporting over physical uplink control channel, a timing offset for reporting over physical uplink shared channel, and/or a layer 3 timer for reporting over dedicated control channel.

7. The method of any one of claims 2 to 6, wherein the logged radio measurement report is at least in part transmitted as layer 1 physical layer uplink control information.

8. The method of any one of claims 1 to 7 further comprising:
- receiving, from the network node, a logged radio measurement report configuration activation command; and
- in response to receiving the logged radio measurement report configuration activation command, activating the logged radio measurement report configuration for starting performing logged radio measurements.

9. The method of claim 8, wherein the logged radio measurement report configuration activation command is a media access control, MAC, control element.

10. The method of any one of claims 1 to 9, wherein the radio measurement report configuration further comprises an immediate radio measurement report configuration for providing the immediate radio measurement reports to the network, wherein the immediate radio measurement reports comprise information about immediate radio measurements.

11. The method of any one of claims 1 to 10, wherein the deactivation command is indicated by the logged radio measurement report configuration, the logged radio measurement report configuration activation command, or a separate media access control, MAC, control element received from the network.

12. The method of any one of claims 1 to 11, wherein the logged radio measurement report configuration comprises one or more logged radio measurement conditions and/or one or more logged radio measurement reporting conditions.

13. The method of claim 12, wherein the one or more logged radio measurement conditions comprise at least one of a logged radio measurement trigger defining when to log radio measurements, a report quantity defining a content of the logged radio measurements, and a logged radio measurement termination condition indicating when to stop logging of radio measurements.

14. The method of claim 13, wherein the logged radio measurement trigger comprises a periodic, an aperiodic, or a semipersistent logging trigger.

15. The method of claim 13 or claim 14, wherein the logging termination condition comprises at least one of a maximum payload size for the logged radio measurement report, a maximum memory size to be used for the logged radio measurements, or maximum time for logging the radio measurements.

16. The method of any one of claims 12 to 15, wherein the one or more logged radio measurement reporting conditions define an opportunity when the logged radio measurement report is to be transmitted and an uplink resource for transmission of the logged radio measurement report, wherein the opportunity comprises at least one of a periodical condition and an event-based condition.

17. The method of claim 16, wherein the uplink resource comprises a periodic resource, an aperiodic resource, or a semipersistent resource.

18. The method of any one of claims 1 to 17, wherein the transmission of immediate radio measurement reports is deactivated with respect to all or part of configured report quantities.

19. The method of any one of claims 1 to 18, wherein the logged radio measurement report configuration is received in a layer 3 radio resource control message.

20. The method of claim 19 further comprising:
- providing the logged radio measurement report configuration from layer 3 to layer 1; and
- storing the logged radio measurement report configuration in layer 1.

21. The method of any one of claims 1 to 20, wherein the radio measurement report configuration is included in a channel status information report configuration information element, CSI-ReportConfig IE.

22. The method of any one of claims 1 to 21, wherein the logged radio measurements as configured with the logged radio measurement report configuration are to be performed more frequently in time, reported less frequently in time, and/or reported after a greater period in time than the immediate radio measurements, wherein the logged radio measurement reports are configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.

23. The method of any one of claims 1 to 22, wherein the logged radio measurement reports include at least one additional report quantity compared to immediate radio measurement reports configured for the user equipment.

24. The method of any one of claims 1 to 23, wherein transmission of not-deactivated immediate radio measurement reports is prioritized over transmission of logged radio measurement reports.

25. The method of any one of claims 1 to 24, wherein a content of the logged radio measurements comprises at least one of channel status radio measurements and beam radio measurements.

26. The method of claim 25, wherein the channel status radio measurements comprise one or more of channel quality information, a precoding matrix indicator, a channel state information resource indicator, a synchronization signal block, a layer indicator, a rank indicator, and a level 1 reference signal received power.

27. The method of claim 25 or claim 26, wherein the beam radio measurements comprise beam predictions.

28. The method of any one of claims 1 to 27, wherein the user equipment is in radio resource control connected state.

29. Method of acquiring radio measurements from a user equipment performed by a network node comprising:
- determining that data collection of logged radio measurements is to be initiated with the user equipment;
- transmitting, to the user equipment, a radio measurement report configuration comprising a logged radio measurement report configuration; and
- indicating, to the user equipment, to deactivate transmission of immediate radio measurement reports with an immediate radio measurement report deactivation command.

30. The method of claim 29 further comprising:
- receiving a logged radio measurement report comprising logged radio measurements from the user equipment according to the logged radio measurement report configuration.

31. The method of claim 30, wherein a time for performing logged radio measurements is defined as periodicity and offset in slots for reporting over physical uplink control channel, a timing offset for reporting over physical uplink shared channel, and/or a layer 3 timer for reporting over dedicated control channel.

32. The method of claim 30 or claim 31, wherein the logged radio measurement report is transmitted at least in part in a layer 3 radio resource control message and/or at least in part as layer 1 physical layer uplink control information.

33. The method of any one of claims 29 to 32, wherein the logged radio measurement report configuration is transmitted in a layer 3 radio resource control message.

34. The method of any one of claims 29 to 33 further comprising:
- transmitting, to the user equipment, a logged radio measurement report configuration activation command for activating the logged radio measurement report configuration at the user equipment.

35. The method of claim 34, wherein the logged radio measurement report configuration activation command is a media access control, MAC, control element.

36. The method of any one of claims 29 to 35, wherein the radio measurement report configuration further comprises an immediate radio measurement report configuration for receiving the immediate radio measurement reports from the user equipment, wherein the immediate radio measurement reports comprise information about immediate radio measurements.

37. The method of any one of claims 29 to 36, wherein the deactivation command is indicated by the logged radio measurement report configuration, the logged radio measurement report configuration activation command, or separate media access control, MAC, control element.

38. The method of any one of claims 29 to 37, wherein the logged radio measurement report configuration comprises one or more logged radio measurement conditions and/or one or more logged radio measurement reporting conditions.

39. The method of any one of claims 38, wherein the one or more logged radio measurement conditions comprise at least one of a logged radio measurement trigger defining when to log radio measurements, a report quantity defining a content of the logged radio measurements, and a logged radio measurement termination condition indicating when to stop logging of radio measurements.

40. The method of claim 39, wherein the logged radio measurement trigger comprises a periodic, an aperiodic, or a semipersistent logging trigger.

41. The method of claim 39 or claim 40, wherein the logging termination condition comprises at least one of a maximum payload size for the logged radio measurement report, a maximum memory size to be used for the logged radio measurements, or maximum time for logging the radio measurements.

42. The method of any one of claims 39 to 41, wherein the one or more logged radio measurement reporting conditions define an opportunity when the logged radio measurement report is to be transmitted and an uplink resource for transmission of the logged radio measurement report, wherein the opportunity comprises at least one of a periodical condition and an event-based condition.

43. The method of claim 42, wherein the uplink resource comprises a periodic resource, an aperiodic resource, or a semipersistent resource.

44. The method of any one of claims 29 to 43, wherein the transmission of immediate radio measurement reports is deactivated with respect to all or part of configured report quantities.

45. The method of any one of claims 29 to 44, wherein the radio measurement report configuration is included in a channel status information report configuration information element, CSI-ReportConfig IE.

46. The method of any one of claims 29 to 45, wherein the logged radio measurements as configured with the logged radio measurement report configuration are to be performed more frequently in time, reported less frequently in time, and/or reported after a greater period in time than the immediate radio measurements, wherein the logged radio measurement reports are configured with a lower periodicity and/or a larger offset in slots for reporting over physical uplink control channel, a larger timing offset for reporting over physical uplink shared channel, and/or a longer layer 3 timer for reporting over dedicated control channel than the immediate radio measurement reports.

47. The method of any one of claims 29 to 46, wherein the logged radio measurement reports include at least one additional report quantity compared to immediate radio measurement reports configured for the user equipment.

48. The method of any one of claims 29 to 47, wherein a content of the logged radio measurements comprises at least one of channel status radio measurements and beam radio measurements.

49. The method of claim 48, wherein the channel status radio measurements comprise one or more of channel quality information, a precoding matrix indicator, a channel state information resource indicator, a synchronization signal block, a layer indicator, a rank indicator, and a level 1 reference signal received power and/or wherein the beam radio measurements comprise beam predictions.

50. The method of any one of claims 29 to 49, wherein the network node comprises a centralized and distributed unit, the method further comprising:
- receiving, from the user equipment, the logged radio measurement report and the immediate radio measurement report at the distributed unit;
- combining, at the distributed unit, a content of the logged radio measurement report and a content of the immediate radio measurement report in a combined radio measurement report; and
- transmitting, from the distributed unit, the combined radio measurement report to the centralized unit.

51. The method of any one of claims 29 to 50, wherein the user equipment is in radio resource control connected state.

52. The method of any one of claims 29 to 51, wherein data collection of logged radio measurements is initiated for artificial intelligence and/or machine learning functionality in the network node.

53. Apparatus of a user equipment being configured to execute the method of any one of claims 1 to 28.

54. Apparatus of a network node being configured to execute the method of any one of claims 29 to 52.

55. System of mobile communication between a user equipment and a network node, wherein the user equipment is configured to execute the method of any one of claims 1 to 28 and the network node is configured to execute the method of any one of claims 29 to 52.
